# EUROPÄISCHE PATENTSCHRIFT

(11) **EP 3 814 067 B1**
(45) Veröffentlichungstag und Bekanntmachung des Hinweises auf die Patenterteilung: **31.05.2023**
(21) Anmeldenummer: 19765641.6
(22) Anmeldetag: 30.08.2019
(51) Int. Cl.: B25J 9/00, G05D 1/02

(54) **EXPLORATION EINES ROBOTEREINSATZGEBIETES DURCH EINEN AUTONOMEN MOBILEN ROBOTER**
EXPLORATION OF A ROBOT DEPLOYMENT AREA BY AN AUTONOMOUS MOBILE ROBOT
EXPLORATION D'UNE ZONE D'INTERVENTION D'UN ROBOT PAR UN ROBOT MOBILE AUTONOME

(30) Priorität: 31.08.2018 DE 102018121365
(43) Veröffentlichungstag der Anmeldung: 05.05.2021
(73) Patentinhaber: Robart GmbH, 4020 Linz (AT)
(72) Erfinder: ARTES, Harold, 4020 Linz (AT); BARTEL, Daniel, 4020 Linz (AT); SEETHALER, Dominik, 4020 Linz (AT); VOGEL, Reinhard, 4020 Linz (AT)
(74) Vertreter: Westphal, Mussgnug & Partner, Patentanwälte mbB
(86) Internationale Anmeldenummer: PCT/AT2019/060284
(87) Internationale Veröffentlichungsnummer: WO 2020/041817

(56) Entgegenhaltungen:
- DE-A1-102016 114 594
- US-A1- 2006 012 493
- VASQUEZ-GOMEZ J IRVING ET AL: "View planning for 3D object reconstruction with a mobile manipulator robot", 2014 IEEE/RSJ INTERNATIONAL CONFERENCE ON INTELLIGENT ROBOTS AND SYSTEMS, IEEE, 14. September 2014 (2014-09-14), Seiten 4227-4233, XP032676408, DOI: 10.1109/IROS.2014.6943158

## Beschreibung

### TECHNISCHES GEBIET

Die vorliegende Beschreibung betrifft das Gebiet der autonomen, mobilen Roboter, insbesondere Roboter, welche eine kartenbasierte Navigation einsetzen.

### HINTERGRUND

In den letzten Jahren finden autonome mobile Roboter, insbesondere Serviceroboter, zunehmend Verwendung im Haushaltsbereich, beispielsweise zur Reinigung oder zur Überwachung eines Einsatzgebietes (*deployment area*) wie beispielsweise einer Wohnung. Hierbei werden zunehmend Robotersysteme eingesetzt, die eine Karte der Umgebung für die Navigation unter Verwendung eines SLAM-Algorithmus (*Simultaneous Localization and Mapping, simultane Lokalisierung und Kartenerstellung*) erstellen. Hierbei wird eine Karte und die Position des Roboters in der Karte mittels Sensoren (Laser-Range-Scanner, Kamera, Berührungssensoren, Odometer, Beschleunigungssensoren, etc.) ermittelt.

Die so erstellte Karte kann dauerhaft (permanent) gespeichert und für nachfolgende Einsätze des Roboters genutzt werden. So kann der Roboter gezielt zu einem Ort gesendet werden, um eine Aufgabe (*task*) zu verrichten, wie beispielsweise das Wohnzimmer zu reinigen. Zudem kann der Arbeitsablauf des Roboters effizienter gestaltet werden, da der Roboter mit dem (in einer Karte gespeicherten) Vorwissen über sein Einsatzgebiet vorausplanen kann.

Es gibt im Wesentlichen zwei Strategien im Umgang mit einer dauerhaft gespeicherten Karte. Zum einen kann diese einmal aufgenommen unverändert weiter verwendet werden, bis der Nutzer entscheidet die Karte zu verwerfen. Dann muss die Karte neu aufgenommen werden und alle vom Nutzer vorgenommenen Eingaben und Anpassungen erneut vorgenommen werden. Insbesondere in Wohnumgebungen, die häufigen Änderungen unterliegen, führt dies zu einem vom Nutzer nicht erwünschten Mehraufwand. Zum anderen kann alternativ jede Veränderung in die Karte eingetragen und im nachfolgenden Einsatz berücksichtigt werden. Hierbei können z.B. vorübergehend geschlossene Türen in der Karte als Hindernisse eingetragen werden, wodurch in der Karte kein (mehr) Weg in den hinter der Tür liegenden Raum führt. Der Roboter kann somit den Raum nicht mehr anfahren, wodurch die Funktionsweise des Roboters stark eingeschränkt ist.

Ein weiteres Problem ist die Stabilität und Effizienz, mit der eine Karte aufgebaut wird. Eine Karte soll möglichst viele Details abdecken. Um dies mit Sensoren mit beschränkter Reichweite zu gewährleisten, wird bei heutigen Robotersystemen in einer Erkundungsfahrt (*exploration run*) die komplette Fläche abgefahren, so dass die Erkundungsfahrt sehr lange dauert. Zudem kann es bei einer Erkundungsfahrt zu unvorhergesehenen Unterbrechungen kommen, wie beispielsweise dem Festfahren des Roboters an schwer befahrbaren Objekten (z.B. herumliegende Kabel, hochfloriger Teppich). Dies kann zu Fehlern in der Karte führen, so dass diese unbrauchbar wird. Deshalb muss die Erkundungsfahrt neu gestartet werden, wobei der Roboter das schon erkundete Gebiet vergisst. Dies erfordert viel Zeit und Geduld des Nutzers des Roboters.

Die Publikation DE 10 2016 114594 A1 offenbart ein Verfahren zur Steuerung eines autonomen mobilen Roboters beschrieben. Das Verfahren umfasst das dauerhafte Speichern und Verwalten von mindestens einer einem Roboter-einsatzgebiet zugeordneten Karte und das Entgegennehmen eines Auftrags durch den Roboter zur Durchführung einer Aufgabe in einem Robotereinsatzgebiet, für das eine gespeicherte Karte existiert. Das Verfahren umfasst weiter das Ermitteln der für die Durchführung der Aufgabe benötigten Karte und das Ermitteln der Position des Roboters in der ermittelten Karte. Des Weiteren wird eine neue Arbeitskopie der ermittelten Karte erstellt, und die Arbeitskopie wird für die Navigation des Roboters durch das Robotereinsatzgebiet bei der Durchführung der Aufgabe genutzt. Die Navigation umfasst dabei das Sammeln von Informationen über die Umgebung und des Bewegungszustands des Roboters mittels Sensoren, das fortlaufende Bestimmen der Position des Roboters basierend auf den gesammelten Informationen sowie das Aktualisieren der Arbeitskopie der Karte bei erkannten Veränderungen der Umgebung. Die dauerhaft gespeicherte Karte bleibt jedoch unverändert.

Die der Erfindung zugrunde liegende Aufgabe besteht darin, die Kartenerstellung stabiler und effizienter zu gestalten. Zudem soll die Karte dauerhaft stabil gehalten und an die sich ändernde Umgebung angepasst werden.

### ZUSAMMENFASSUNG

Die oben genannte Aufgabe wird durch das Verfahren gemäß Anspruch 1 sowie durch die Roboter gemäß Anspruch 11 gelöst. Verschiedene Ausführungsbeispiele und Weiterentwicklungen sind Gegenstand der abhängigen Ansprüche.

Ein Ausführungsbeispiel betrifft ein Verfahren für einen autonomen mobilen Roboter zur erneuten Erkundung eines bereits in einer Karte des Roboters verzeichneten Gebiets. Gemäß einem Beispiel umfasst das Verfahren das Speichern einer Karte eines Einsatzgebietes eines autonomen mobilen Roboters, wobei die Karte Orientierungsinformationen, welche die Struktur der Umgebung im Einsatzgebietes repräsentieren, sowie auch Metainformationen enthält. Das Verfahren umfasst weiter das Empfangen eines Kommandos über eine Kommunikationseinheit des Roboters, das den Roboter dazu veranlasst, eine erneute Erkundung von zumindest einem Teil des Einsatzgebietes zu starten. Daraufhin erkundet der Roboter den zumindest einen Teils des Einsatzgebietes erneut, wobei der Roboter mittels eines Sensors Informationen über die Struktur seiner Umgebung im Einsatzgebietes erfasst. Das Verfahren umfasst weiter das Aktualisieren der Karte des Einsatzgebietes, und das Speichern der aktualisierten Karte für die Nutzung bei der Roboternavigation während einer Vielzahl von künftigen Robotereinsätzen. Die erwähnte Aktualisierung umfasst dabei das Ermitteln von Änderungen im Einsatzgebiet basierend auf den während der Erkundung erfassten Informationen über die Struktur der Umgebung und den in der Karte bereits gespeicherten Orientierungsinformationen, und das Aktualisieren der Orientierungsinformationen und der Metainformationen basierend auf den ermittelten Änderungen.

Des Weiteren wird ein autonomer mobiler Roboter beschrieben. Gemäß einem Ausführungsbeispiel weist der Roboter folgendes auf: eine Antriebseinheit zum Bewegen des Roboters in einem Einsatzgebiet des Roboters, eine Sensoreinheit zum Erfassen von Informationen betreffend die Struktur der Umgebung im Einsatzgebiet sowie eine Steuereinheit mit einem Navigationsmodul, das dazu ausgebildet ist, mittels einer Erkundungsfahrt eine Karte des Einsatzgebiet zu erstellen und diese dauerhaft für die Verwendung in künftigen Einsätzen des Roboters abzuspeichern. Der Roboter weist weiter eine Kommunikationseinheit zum Empfangen einer Nutzeranweisung betreffend eine Serviceaufgabe sowie zum Empfangen einer Nutzeranweisung zum Aktualisieren der gespeicherten Karte auf. Das Navigationsmodul ist weiter dazu ausgebildet, den Roboter beim Verrichten einer Serviceaufgabe anhand der gespeicherten Karte und anhand den von der Sensoreinheit erfassten Informationen durch das Robotereinsatzgebietes zu navigieren, wobei die in der gespeicherten Karte enthaltenen und für die Navigation relevanten Informationen während des Verrichtens einer Serviceaufgabe nicht dauerhaft geändert werden. Das Navigationsmodul ist weiter dazu ausgebildet auf eine Nutzeranweisung zum Aktualisieren der gespeicherten Karte das Einsatzgebiet zumindest teilweise erneut zu erkunden, wobei im Zuge des Erkundens die in der gespeicherten Karte enthaltenen und für die Navigation relevanten Informationen aktualisiert werden.

Ein Weiteren Verfahren betrifft das robotergestützte Durchsuchen eines Gebiets nach zu suchenden Objekten und/oder Ereignissen mittels eines autonomen mobilen Roboters. Zu diesem Zweck ist der Roboter dazu eingerichtet, zumindest eine Karte eines Einsatzgebiets des Roboters dauerhaft für die Verwendung in zukünftigen Einsätzen des Roboters zu speichern, und mittels einer Sensoreinheit Informationen über die Umgebung des Roboters in seinem Einsatzgebiet zu erfassen und basierend auf den von der Sensoreinheit erfassten Informationen Objekte und/oder Ereignisse in einem Erfassungsbereich der Sensoreinheit mit gegebener Genauigkeit zu detektieren und lokalisieren. Gemäß einem Beispiel umfasst das Verfahren das Navigieren des Roboters durch das Einsatzgebiet anhand der gespeicherten Karte, um dieses nach gesuchten Objekten und/oder Ereignissen zu durchsuchen, das Ermitteln der Position eines gesuchten Objektes und/oder gesuchten Ereignisse bezüglich der Karte, wenn es mit Hilfe eines Sensors der Sensoreinheit erfasst und lokalisiert wurde, und das Eintragen der vom Erfassungsbereich des jeweiligen Sensors abgedeckten Fläche des Einsatzgebiets in der Karte. Das Ermitteln der Position und das Eintragen der vom Erfassungsbereich des Sensors abgedeckten Fläche wird wiederholt durchgeführt bis ein Abbruchkriterium erfüllt ist.

Ein weiteres Verfahren betrifft die robotergestützte Erkundung eines Gebiets. Gemäß einem Beispiel umfasst das Verfahren folgendes: das Erstellen einer Karte eines Einsatzgebiets eines autonomen mobilen Roboters in einer Erkundungsfahrt durch das Einsatzgebiet, wobei der Roboter durch das Einsatzgebiet navigiert und mit Hilfe von Sensoren Informationen über die Umgebung und seine eigene Position erfasst; das Detektieren eines Problems, das die Navigation des Roboters und folglich das Erstellen der Karte stört; das Ermitteln eines Zeitpunktes und/oder eines Orts in der bis zur Detektion des Problems erstellten Karte, der dem detektierten Problem zugeordnet werden kann; das Detektieren, dass ein ungestörtes Navigieren wieder möglich ist; und das Fortsetzen des Erstellens der Karte unter Berücksichtigung des dem Problem zugeordneten Zeitpunktes und/oder Orts, wobei der Roboter seine Position in der bis zur Detektion des Problems erstellten Karte bestimmt und die darin enthaltenen Informationen für das weitere Erstellen der Karte verwendet.

Ein weiteres hier beschriebenes Beispiel betrifft ein Verfahren für einen autonomen mobilen Roboter, bei dem der autonome mobile Roboters mittels einer Karte durch ein bestimmtes Gebiet navigiert, dabei einen ersten Messwert ermittelt, welcher die tatsächlich befahrbare Fläche im dem Gebiet repräsentiert, und daraus ein Maßes für die Befahrbarkeit des Gebiets basierend auf dem ersten Messwert und einem gespeicherten Referenzwert bestimmt. Ein Nutzer wird abhängig von dem ermittelten Maß für die Befahrbarkeit benachrichtigt.

Schließlich wird ein Verfahren zur Erkundung eines Robotereinsatzgebiets durch einen autonomen, mobilen Roboter zum Zweck der Erstellung einer Karte des Robotereinsatzgebiets beschrieben. Gemäß einem Beispiel weist das Verfahren folgendes auf: das Erkunden des Robotereinsatzgebiets in einem ersten Modus gemäß einer ersten Erkundungsstrategie, gemäß der der Roboter mittels einer Sensoreinheit erste Strukturen in einem ersten Erfassungsbereich detektiert sowie zweite Strukturen in einem zweiten Erfassungsbereich detektiert; das Erkunden des Robotereinsatzgebiets in einem zweiten Modus gemäß einer zweiten Erkundungsstrategie, wenn der Roboter in dem ersten Modus eine zweite Struktur detektiert hat; und das Erstellen der Karte basierend auf den im ersten Modus und im zweiten Modus detektierten Strukturen und Speichern der Karte für die Verwendung zur Navigation in nachfolgenden Robotereinsätzen.

Des weiteren werden Beispiele autonomer mobiler Roboter beschrieben, welche dazu ausgebildet sind, die hier beschriebenen Verfahren durchzuführen.

### KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen.
Figur 1 illustriert exemplarischen einen autonomen, mobilen Roboter in seinem Robotereinsatzgebiet.
Figur 2 ist ein exemplarisches Blockdiagramm, in dem verschiedene Einheiten eines autonomen mobilen Roboters sowie Peripheriegeräte wie beispielsweise eine Basisstation des Roboters dargestellt sind.
Figur 3 illustriert ein Beispiel eines Einsatzgebiet für einen autonomen mobilen Roboter.
Figur 4 visualisiert die dem Einsatzgebiet aus Fig. 3 zugeordneten vom Roboter detektierten Orientierungsinformationen.
Figur 5 illustriert die Karte des Robotereinsatzgebietes gemäß Fig. 3 und in der Karte enthaltene Metainformationen.
Figur 6 illustriert die Detektion von Hindernissen mit einem Sensor, der einen definierten Erfassungsbereich (definiertes Sichtfeld) aufweist.
Figur 7 illustriert die Bewegung des Roboters durch das Einsatzgebiet während einer Erkundungsfahrt und die bereits erkundeten Bereiche des Einsatzgebiets.
Figur 8 illustriert ein erstes Beispiel betreffend die Vorgehensweise bei der Erkundung des Robotereinsatzgebietes, um eine Karte zu erstellen.
Figur 9 illustriert ein zweites Beispiel betreffend die Vorgehensweise bei der Erkundung des Robotereinsatzgebietes, um eine Karte zu erstellen.
Figur 10 illustriert ein drittes Beispiel betreffend die Vorgehensweise bei der Erkundung des Robotereinsatzgebietes, wobei der Fall berücksichtigt wird, dass dem Roboter ein Problem widerfährt.
Figur 11 illustriert ein Beispiel für ein Problem, das sich dem Roboter bei einer Erkundungsfahrt stellen kann.
Figur 12 illustriert das Einsatzgebiet aus Fig. 3 mit mehreren vom Roboter zu detektierende Veränderungen.
Figur 13 illustriert den für die Durchsuchung eines Gebiets berücksichtigten Erfassungsbereich eines Sensors.

### DETAILLIERTE BESCHREIBUNG

Ein autonomer mobiler Roboter führt als Serviceroboter selbsttätig eine oder mehrere Aufgaben (*tasks,* d.h. Tätigkeiten) in einem Robotereinsatzgebiet (*robot deployment area*) aus. Beispiele für die genannten Aufgaben sind die Reinigung einer Bodenfläche in dem Einsatzgebiet, die Überwachung und Inspektion des Robotereinsatzgebiets, den Transport von Gegenständen innerhalb des Einsatzgebiets (z.B. eine Wohnung) oder sonstige Tätigkeiten beispielsweise zur Unterhaltung eines Nutzers. Derartige Aufgaben entsprechen der eigentlichen Bestimmung des Serviceroboters und werden daher Serviceaufgaben (*service tasks*) bezeichnet. Die hier beschriebenen Ausführungsbeispiele betreffen zumeist einen Reinigungsroboter. Sie sind jedoch nicht auf Reinigungsroboter beschränkt, sondern anwendbar auf alle Anwendungen, in denen ein autonomer mobiler Roboter eine Aufgabe in einem definierten Einsatzgebiet durchführen soll, in dem er sich selbstständig mithilfe einer Karte bewegen und navigieren kann.

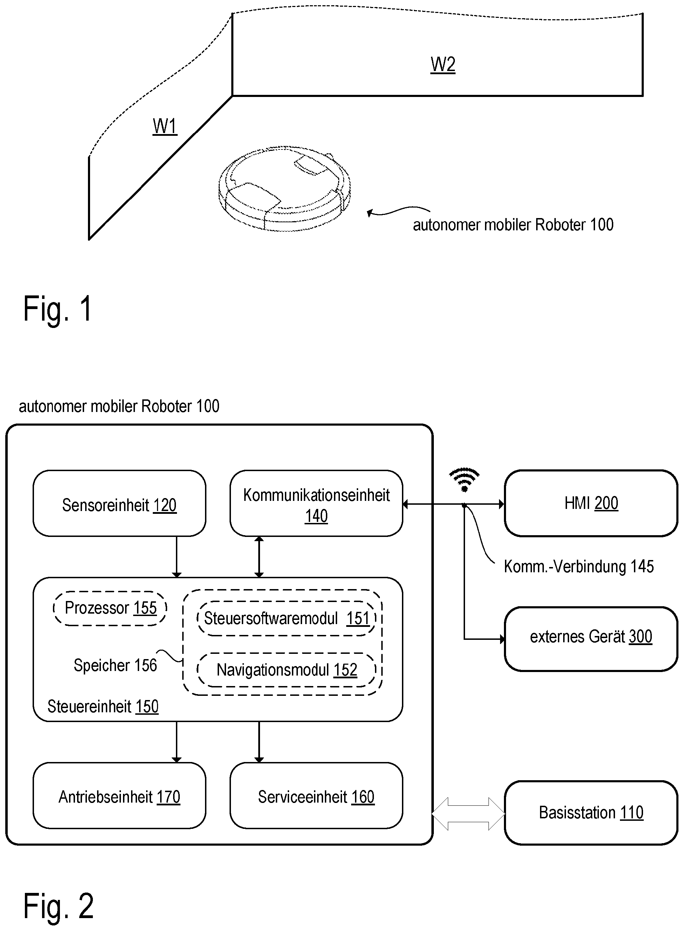

Fig. 1 illustriert exemplarisch einen autonomen mobilen Roboter 100, insbesondere Reinigungsroboter. Andere Beispiele für autonomen mobile Roboter sind u.a. Transportroboter, Überwachungsroboter, Telepräsenzroboter, etc. Moderne autonome mobile Roboter navigieren kartenbasiert, d.h. sie verfügen über eine elektronische Karte ihres Einsatzgebietes. In manchen Situationen hat der Roboter jedoch keine oder keine aktuelle Karte des Einsatzgebietes und er muss seine (ihm noch unbekannte) Umgebung erkunden und kartieren. Dieser Prozess wird auch als Erkundungsfahrt (*exploration run*), Lernfahrt oder "Exploration" (Erkundung) bezeichnet. Dabei detektiert der Roboter Hindernisse, während er sich durch das Robotereinsatzgebiet bewegt. In dem in Fig. 1 dargestellten Beispiel hat der Roboter 100 bereits Teile der Wände W1 und W2 eines Raumes erkannt. Verfahren für eine Erkundung und Kartierung der Umgebung eines autonomen mobilen Roboters sind an sich bekannt. Beispielsweise kann die durch den Roboter befahrbare Fläche vollständig abgefahren werden, während mittels eines SLAM-Verfahrens (*Simultaneous Localization and Mapping, simultane Lokalisierung und Kartenerstellung*) die Karte erstellt wird. Die Durchführung einer Erkundungsfahrt ist keine Serviceaufgabe da der Roboter dabei nicht notwendigerweise seine bestimmungsgemäße Tätigkeit (z.B. Bodenreinigung) durchführt. Allerdings ist es nicht ausgeschlossen, dass der Roboter während einer Erkundungsfahrt gleichzeitig eine Serviceaufgabe erledigt. Während eines Robotereinsatzes kann der Roboter eine oder mehrere Serviceaufgaben erledigen sowie Zusatzaufgaben (*supplemental tasks*) wie z.B. die Erkundung des Einsatzgebietes zu Erstellung oder Aktualisierung der Karte.

Figur 2 zeigt beispielhaft anhand eines Blockdiagrams verschiedene Einheiten eines autonomen mobilen Roboters 100. Eine Einheit kann dabei eine eigenständige Baugruppe oder ein Teil (Modul) einer Software zur Steuerung des Roboters sein. Eine Einheit kann mehrere Untereinheiten aufweisen. Eine Einheit kann vollständig in Hardware oder als Kombination von Hard- und Software (z.B. Firmware) implementiert sein. Die für das Verhalten des Roboters 100 zuständige Software kann von der Steuereinheit 150 des Roboters 100 ausgeführt werden. In dem dargestellten Beispiel beinhaltet die Steuereinheit 150 einen Prozessor 155, der dazu ausgebildet ist, in einem Speicher 156 enthaltene SoftwareInstruktionen auszuführen. Einige Funktionen der Steuereinheit 150 können zumindest teilweise auch mit Hilfe eines externen Rechners durchgeführt werden. Das heißt, die von der Steuereinheit 150 benötigte Rechenleistung kann zumindest teilweise auf einen externen Rechner ausgelagert sein, welcher für den Roboter beispielsweise über ein lokales Netzwerk (z.B. WLAN, *wireless local area network*) oder über das Internet erreichbar sein kann. Beispielsweise kann der externe Rechner einen Cloud-Computing-Service bereitstellen.

Der autonome mobile Roboter 100 umfasst eine Antriebseinheit 170, welche beispielsweise Elektromotoren, einen Motorcontroller zur Ansteuerung der Elektromotoren, sowie Getriebe und Räder aufweisen kann. Mit Hilfe der Antriebseinheit 170 kann der Roboter 100 - zumindest theoretisch - jeden Punkt seines Einsatzgebiets erreichen. Die Antriebseinheit 170 (z.B. der erwähnte Motorcontroller) ist dazu ausgebildet, von der Steuereinheit 150 empfangene Kommandos oder Signale in eine Bewegung des Roboters 100 umzusetzen.

Der autonome mobile Roboter 100 umfasst eine Kommunikationseinheit 140, um eine Kommunikationsverbindung 145 zu einer Mensch-Maschine-Schnittstelle (HMI, *human-machine interface*) 200 und/oder anderen externen Geräten 300 herzustellen. Die Kommunikationsverbindung 145 ist beispielsweise eine direkte drahtlose Verbindung (z.B. Bluetooth), eine lokale drahtlose lokale Netzwerkverbindung (z.B. WLAN oder ZigBee) oder eine Internetverbindung (z.B. zu einem Cloud-Service). Die Mensch-Maschine-Schnittstelle 200 kann einem Nutzer Informationen über den autonomen mobilen Roboter 100 beispielsweise in visueller oder auch akustischer Form ausgeben (z.B. Batteriestatus, aktueller Arbeitsauftrag, Karteninformationen wie eine Reinigungskarte, etc.) und Nutzerkommandos entgegenzunehmen. Ein Nutzerkommando kann z.B. einen Arbeitsauftrag für den autonomen mobilen Roboters 100 darstellen, eine bestimmte Aufgabe (*task*) durchzuführen.

Beispiele für eine HMI 200 sind Tablet-PC, Smartphone, Smartwatch und andere Wearables, Personal Computer, Smart-TV, oder Head-Mounted Displays, und dergleichen. Eine HMI 200 kann direkt in den Roboter integriert sein, wodurch der Roboter 100 beispielsweise über Tasten, Gesten und/oder Sprachein- und -ausgabe bedient werden kann.

Beispiele für externe Geräte 300 sind Computer und Server, auf denen Berechnungen und/oder Daten ausgelagert werden, externe Sensoren, die zusätzliche nützliche Informationen liefern, oder andere Haushaltsgeräte (z.B. andere autonome mobile Roboter), mit denen der autonome mobile Roboter 100 zusammenarbeiten und/oder Informationen austauschen kann.

Der autonome mobile Roboter 100 kann eine Serviceeinheit 160 besitzen, um eine Serviceaufgabe zu verrichten (siehe Fig. 2). Die Serviceeinheit 160 ist beispielsweise eine Reinigungseinheit zur Reinigung einer Bodenfläche (z.B. Bürste, Saugvorrichtung) oder ein Greifarm zum Greifen und Transportieren von Gegenständen. Bei Telepräsenz-Roboter kann die Serviceeinheit 160 eine Multimediaeinheit bestehend aus beispielsweise Mikrofon, Kamera und Bildschirm sein, um die Kommunikation zwischen mehreren räumlich weit entfernten Personen zu ermöglichen. Ein Roboter zur Überwachung oder Inspektion (z.B. ein Nachtwächter-Roboter) ermittelt auf Kontrollfahrten mit Hilfe seiner Sensoren ungewöhnliche Ereignisse (z.B. Feuer, Licht, unautorisierte Personen, etc.) und informiert beispielsweise eine Kontrollstelle hierüber. Hierbei umfasst die Serviceeinheit 160 beispielsweise alle Funktionen zum Erkennen eines ungewöhnlichen Ereignisses.

Der autonome mobile Roboter 100 umfasst eine Sensoreinheit 120 mit verschiedenen Sensoren, beispielsweise einen oder mehrere Sensoren zur Erfassung von Informationen über die Struktur der Umgebung des Roboters in seinem Einsatzgebiet, wie z.B. die Position und Ausdehnung von Hindernissen oder anderen Landmarken (*landmarks*) im Einsatzgebiet. Sensoren zur Erfassung von Informationen über die Umgebung sind beispielsweise Sensoren zur Messung von Abständen zu Objekten (z.B. Wänden oder anderen Hindernissen, etc.) in der Umgebung des Roboters wie beispielsweise einen optischen und/oder akustischen Sensor, der mittels Triangulation oder Laufzeitmessung eines ausgesandten Signals Abstände messen kann (Triangulationssensor, 3D-Kamera, Laserscanner, Ultraschallsensoren, etc.). Alternativ oder zusätzlich kann eine Kamera genutzt werden, um Informationen über die Umgebung zu sammeln. Insbesondere bei Betrachtung eines Objekts von zwei oder mehr Positionen aus, kann ebenfalls die Position und Ausdehnung des Objekts bestimmt werden.

Zusätzlich kann die Sensoreinheit 120 des Roboters Sensoren umfassen, die dazu geeignet sind, einen (zumeist unbeabsichtigten) Kontakt (bzw. eine Kollision) mit einem Hindernis zu detektieren. Dies kann durch Beschleunigungsmesser (die z.B. die Geschwindigkeitsänderung des Roboters bei einer Kollision detektieren), Kontaktschalter, kapazitive Sensoren oder andere taktile bzw. berührungsempfindliche Sensoren realisiert werden. Zusätzlich kann der Roboter Bodensensoren aufweisen, um den Abstand zum Boden bestimmen zu können oder um eine Veränderung des Abstandes zum Boden (z.B. bei einer Absturzkante am Boden, beispielsweise eine Treppenstufe) erkennen zu können. Weitere übliche Sensoren im Bereich autonomer mobiler Roboter sind Sensoren zur Bestimmung der Geschwindigkeit und/oder des zurückgelegten Weges des Roboters wie z.B. Odometer bzw. Inertialsensoren (Beschleunigungssensor, Drehratensensor) zur Bestimmung von Lage- und Bewegungsänderung des Roboters sowie Radkontaktschalter, um einen Kontakt zwischen Rad und Boden zu detektieren. Beispielsweise sind die Sensoren dazu ausgelegt Strukturen der Bodenfläche wie beispielsweise den Bodenbelag, Bodenbelagsgrenzen und/oder (Tür-)Schwellen zu detektieren. Dies geschieht beispielsweise mittels Bildern einer Kamera, Abstandsmessung zwischen Roboter und Bodenfläche und/oder Messen der Lageänderung des Roboters beim Überfahren von Schwellen (z.B. mittels Inertialsensoren).

Der autonome mobile Roboter 100 kann einer Basisstation 110 zugeordnet sein, an welcher er beispielsweise seine Energiespeicher (Batterien) laden kann. Zu dieser Basisstation 110 kann der Roboter 100 nach Beendigung einer Aufgabe zurückkehren. Wenn der Roboter keine Aufgabe mehr zu bearbeiten hat, kann er in der Basisstation 110 auf einen neuen Einsatz warten.

Die Steuereinheit 150 kann dazu ausgebildet sein, alle Funktionen bereit zu stellen, die der Roboter benötigt, um sich selbstständig in seinem Einsatzgebiet bewegen und eine Aufgabe verrichten zu können. Hierzu umfasst die Steuereinheit 150 beispielsweise ein Speichermodul 156 und einen Prozessor 155, der dazu ausgebildet ist, in dem Speicher enthaltene Softwareinstruktionen auszuführen. Die Steuereinheit 150 kann basierend auf den von der Sensoreinheit 120 und der Kommunikationseinheit 140 erhaltenen Informationen Steuerkommandos (z.B. Steuersignale) für die Arbeitseinheit 160 und die Antriebseinheit 170 generieren. Die Antriebseinheit 170 kann wie bereits erwähnt diese Steuerkommandos bzw. Steuersignale in eine Bewegung des Roboters umsetzen. Auch die in dem Speicher 156 enthaltene Software kann modular ausgebildet sein. Ein Navigationsmodul 152 stellt beispielsweise Funktionen für das automatische Erstellen einer Karte des Einsatzgebietes, die Bestimmung der Position des Roboters 100 in dieser Karte, sowie für die Bewegungsplanung (Pfadplanung) des Roboters 100 bereit. Das Steuersoftwaremodul 151 stellt z.B. allgemeine (globale) Steuerfunktionen bereit und kann eine Schnittstelle zwischen den einzelnen Modulen bilden.

*Navigationsmodul und Karten* - Damit der Roboter autonom eine Aufgabe verrichten kann, kann die Steuereinheit 150 Funktionen zur Navigation des Roboters in seinem Einsatzgebiet umfassen, die z.B. von dem oben erwähnten Navigationsmodul 152 bereitgestellt werden. Diese Funktionen sind an sich bekannt und können unter anderem eine oder mehrere der Folgenden umfassen:
- das Erstellen von (elektronischen) Karten durch Sammeln von Informationen über die Umgebung mit Hilfe der Sensoreinheit 120, beispielsweise aber nicht ausschließlich mittels SLAM-Verfahren;
- das Bestimmen der Position des Roboters in einer Karte ohne oder mit nur sehr beschränktem Vorwissen basierend auf den mit den Sensoren der Sensoreinheit 120 ermittelten Informationen der Umgebung (globale Selbstlokalisierung);
- eine kartenbasierte Pfadplanung (Trajektorienplanung) von einer aktuellen Position des Roboters (Startpunkt) zu einem Ziel;
- Funktionen zur Interpretation der Karte und der Umgebung wie z.B. zum Erkennen von Räumen oder anderen Teilgebieten (z.B. anhand erkannter Türen, Grenzen zwischen verschiedenen Bodenbelägen, etc.);
- das Management von einer oder mehreren Karten zu einem oder mehreren den Karten zugeordneten Einsatzgebieten des Roboters.

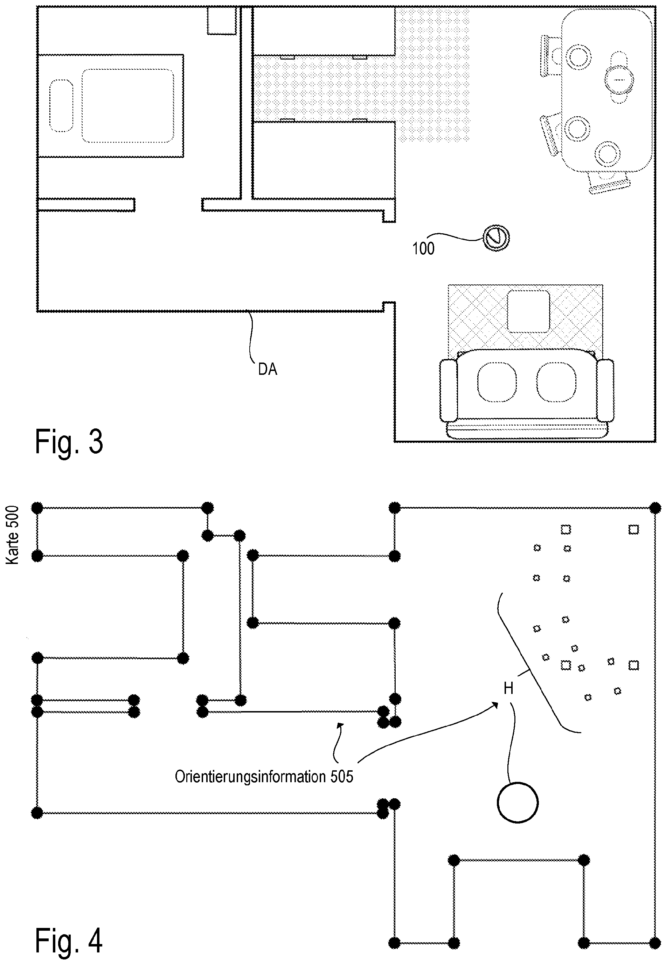

Fig. 3 zeigt beispielhaft ein Einsatzgebiet DA für einen autonomen mobilen Roboter 100 sowie dessen aktuelle Position innerhalb des Einsatzgebietes. Die Position des Roboters kann als Punkt in der Bewegungsebene (z.B. Mittelpunkt des Roboters) und seiner Orientierung (z.B. Vorwärtsrichtung) beschrieben werden (auch als Pose bezeichnet). Das Einsatzgebiet ist beispielsweise eine Wohnung mit mehreren Räumen (z.B. Küche, Wohnzimmer, Flur, Schlafzimmer) mit verschiedenen Möbeln und Bodenbelägen. Um sich in diesem Einsatzgebiet bewegen zu können, benötigt der Roboter 100 eine Karte 500 des Einsatzgebiets DA. Diese Karte kann von dem Roboter selbsttätig aufgebaut und permanent gespeichert werden. In diesem Kontext bedeutet "permanent speichern", dass die Karte für eine beliebige Anzahl zukünftiger Robotereinsätze für die Navigation (Planung und Durchführung der Roboterbewegungen) zur Verfügung steht. Das impliziert jedoch nicht, dass die Karte nicht modifizierbar oder löschbar wäre, sondern lediglich, dass diese für die Wiederverwendung währen eine unbestimmte Anzahl von zukünftiger Einsätze des Roboters gespeichert wird. Im Gegensatz zu einer permanent gespeicherten Karte wird eine temporäre Karte nur für einen aktuellen Robotereinsatz aufgebaut und anschließend wieder verworfen (d.h. nicht wiederverwendet).

Generell ist eine vom Roboter 100 verwendbare (elektronische) Karte 500 eine Sammlung von Kartendaten zur Speicherung von ortsbezogenen Informationen über ein Einsatzgebiet DA des Roboters und die für den Roboter relevante Umgebung in diesem Einsatzgebiet. Eine Karte repräsentiert somit eine Vielzahl von Datensätzen mit Kartendaten, und die Kartendaten können beliebige ortsbezogenen Information enthalten. Teilaspekte dieser Datensätze wie beispielsweise eine erkannte Verschmutzung, eine vorgenommene Reinigung oder erkannte Räume können ebenfalls als Karte (insbesondere Verschmutzungskarte, Reinigungskarte, Raumkarte) bezeichnet werden.

Eine wichtige technische Voraussetzung, damit der Roboter 100 mit einer Vielzahl ortsbezogener Informationen arbeiten kann, ist die Kenntnis seiner eigenen Position. Das heißt, der Roboter muss sich möglichst gut und zuverlässig orientieren und lokalisieren können. Hierzu enthält die Karte 500 Orientierungsinformationen 505 (auch als Navigations-Features bezeichnet), die beispielsweise die Position von Landmarken und/oder Hindernissen im Einsatzgebiet beschreiben. Die Lage von Orientierungsinformationen wird meist mittels Koordinaten definiert. Die Orientierungsinformationen sind beispielsweise die mit einem SLAM-Verfahren verarbeiteten Karteninformationen.

Neben den Orientierungsinformationen sammelt der Roboter weitere Informationen über das Einsatzgebiet, die für die Navigation und/oder Interaktion mit einem Nutzer relevant sein können, jedoch nicht notwendig für die Positionsbestimmung des Roboters sind. Diese Informationen können basierend auf einer Sensormessung (z.B. Verschmutzung), einem Arbeitsauftrag (z.B. gereinigte Fläche), einer vom Roboter selbst vorgenommenen Interpretation von in der Karte gespeicherten Orientierungsinformationen 505 betreffend die Umgebung (z.B. Raumerkennung) und/oder einer Nutzereingabe (z.B. Raumnamen, Sperrbereich, Zeitpläne) ermittelt werden. Die Gesamtheit dieser Informationen wird im Folgenden als Metainformationen bezeichnet.

Fig. 4 zeigt beispielhaft Orientierungsinformationen 505 einer Karte 500 des Einsatzgebiets DA, an denen sich der Roboter orientieren und mit deren Hilfe der Roboter sich lokalisieren kann. Wie erwähnt können derartige Orientierungsinformationen 505 vom Roboter, z.B. mittels Sensoren und eines SLAM-Algorithmus aufgebaut und in eine Karte eingetragen werden. Beispielsweise misst der Roboter mittels eines Abstandssensors den Abstand zu Hindernissen (z.B. eine Wand, ein Möbelstück, eine Tür, etc.) und berechnet aus den Messdaten (üblicherweise eine Punktwolke) Liniensegmente, welche die Grenzen seines Einsatzgebietes definieren. Das Einsatzgebiet des Roboters kann beispielsweise durch eine geschlossene Kette von Liniensegmenten (Polygonzug) definiert werden. Zusätzlich können weitere Hindernisse H, die innerhalb des Einsatzgebiets liegen, zu den Orientierungsinformationen gehören. Eine Alternative zu der genannten Kette von Liniensegmenten ist eine Rasterkarte, bei der ein Raster von Zellen (von z.B. 10x10 cm²) über das Robotereinsatzgebiet gelegt wird, und für jede Zelle markiert wird, ob sie von einem Hindernis belegt wird und/oder frei ist. Eine weitere Möglichkeit ist eine Karte basierend auf Bildinformationen einer Kamera aufzubauen, wobei die Bildinformationen ebenfalls mit einem Ort der Aufnahme verknüpft werden. Die Bildinformationen können wiedererkannt werden, wodurch der Roboter sich ebenfalls in seiner Umgebung lokalisieren und orientieren kann.

Aus der spezifischen Struktur der Orientierungsinformationen kann der Roboter seine Position im Einsatzgebiet bestimmen. So sind Methoden zur globalen Selbstlokalisierung bekannt, mit denen der Roboter ohne oder mit nur begrenztem Vorwissen seine Position im Einsatzgebiet basierend auf den Orientierungsinformationen bestimmen kann. Dies kann beispielsweise nach einem Versetzen oder Ausschalten des Roboters notwendig sein. Da die globale Selbstlokalisierung ohne spezifisches Vorwissen über die Position des Roboters arbeitet unterscheiden sich Methoden zur globalen Selbstlokalisierung prinzipiell von dem Positions-Tracking (z.B. basierend auf Odometrie) während der Durchführung eines SLAM-Verfahrens.

Eine Wohnumgebung als Einsatzgebiet 200 des Roboters 100 ist ständigen Änderungen durch die Bewohner unterworfen. So können Türen geöffnet und geschlossen werden, oder neue Hindernisse (z.B. eine Tasche, eine Stehlampe, etc.) vorübergehend oder dauerhaft im Robotereinsatzgebiet abgestellt werden. Hierdurch ändern sich ebenfalls einzelne Aspekte der Orientierungsinformationen. Andere Aspekte wie insbesondere die Position von Wänden oder großen Möbelstücken (Schrank, Couch) bleiben jedoch meist unverändert, so dass eine robuste Navigation weiter möglich ist. Gängige Verfahren zur Navigation des Roboters können robust gegen solche Änderungen ausgestaltet werden.

Langfristig kann jedoch die Navigation des Roboters gestört werden, wenn in der Karte beispielsweise nicht vorhandene Hindernisse (z.B. aufgrund einer geschlossenen Tür) verzeichnet bzw. vorhandene Hindernisse nicht verzeichnet sind. Um störende Einflüsse von vorhergehenden Einsätzen zu vermeiden, kann die Karte 500 während einer Erkundungs- bzw. Lernfahrt erstellt werden, wobei der Nutzer seine Wohnung möglichst gut aufgeräumt hat. Diese Karte 500 wird permanent gespeichert. Für die Erledigung einer Serviceaufgabe (z.B. Reinigung, Transport, Inspektion, Unterhaltung, etc.) kann eine Arbeitskopie verwendet werden. In der Arbeitskopie werden alle für die Erledigung der Serviceaufgabe relevanten Änderungen erfasst, während die permanent gespeicherte Karte 500 unverändert bleiben. Die Arbeitskopie und somit die gegenüber der Karte 500 erkannten Änderungen können nach der Beendigung der Aufgabe verworfen werden, so dass die Karte 500 unverändert bleibt. Hierdurch kann vermieden werden, dass unerwünschte Änderungen in der permanent gespeicherten Karte 500 auftreten, wie beispielsweise das Eintragen von nur vorübergehend im Einsatzgebiet platzierten Hindernissen oder während des Einsatz entstandenen Kartenfehlern (bspw. fehlerhafte Messungen, im Rahmen von Problemen bei der Navigation).

Alternativ oder zusätzlich können die Änderungen z.B. durch den Vergleich der Arbeitskopie und der permanent gespeicherten Karte analysiert und bewertet werden. Ergebnisse dieser Analyse können in die permanent gespeicherte Karte 500 übernommen werden, wodurch ein dauerhaftes Lern- und Anpassungsverhalten des Roboters an seine Umgebung ermöglicht wird. Um hierbei unerwünschte Auswirkungen auf die Orientierungsfähigkeit des Roboters zu vermeiden, können diese Informationen als Metainformationen 510 gespeichert werden, wobei die Orientierungsinformationen 505 der permanent gespeicherten Karte 500 unverändert bleiben. Beispielsweise werden die Orientierungsinformationen 505 nur nach einer Bestätigung durch den Nutzer aktualisiert. Beispielsweise kann für die Aktualisierung der Orientierungsinformationen 505 auch eine erneute Erkundungsfahrt notwendig sein. Details betreffend die Bewertung von Änderungen in der Umgebung und zu einer erneuten Erkundungsfahrt werden weiter unten erläutert, nachdem im Folgenden die erwähnten Metainformationen näher diskutiert wurden.

Metainformationen sind zu der Karte gehörige ortsbezogene Daten, die nicht für die Positionsbestimmung des Roboters notwendig sind. Diese Informationen können beispielsweise genutzt werden, damit der Roboter mehr über seine Umgebung "lernt" und sich besser an diese anpassen kann, sowie auch für eine effizientere Nutzer-Roboter-Interaktion. Beispielsweise können Metainformationen für eine bessere Pfad- und Arbeitsplanung genutzt werden. Die Metainformationen umfassen hierbei beispielsweise (aber nicht ausschließlich) eines oder mehrere der folgenden Informationen:
- auf Nutzereingaben basierende Informationen;
- über mehrere Robotereinsätze erlernte Informationen insbesondere (statistische) Informationen z.B. zur Dauer der Abarbeitung einer Serviceaufgabe, zur Häufigkeit einer Serviceaufgabe, zu Problemen bei der Navigation, Informationen zur Verschmutzung;
- eine Unterteilung des Einsatzgebietes in Teilgebiete (z.B. einzelne Räume), und eine Benennung der Räume bzw. Teilgebiete und/oder anderer Objekte;
- Eigenschaften von Räumen bzw. Teilgebieten, insbesondere Größe, Flächeneigenschaften z.B. Bodenbelag in Teilgebieten, Sperrbereiche;
- Zeitpläne und Spezifikationen für Serviceaufgaben; benötigte Zeit für die Verrichtung einer Serviceaufgabe in einem Teilgebiet;
- topologische Karteninformationen und Zusammenhänge (z.B. Verknüpfung von Flächen und Räumen); und
- Informationen zur Befahrbarkeit von Wegen.

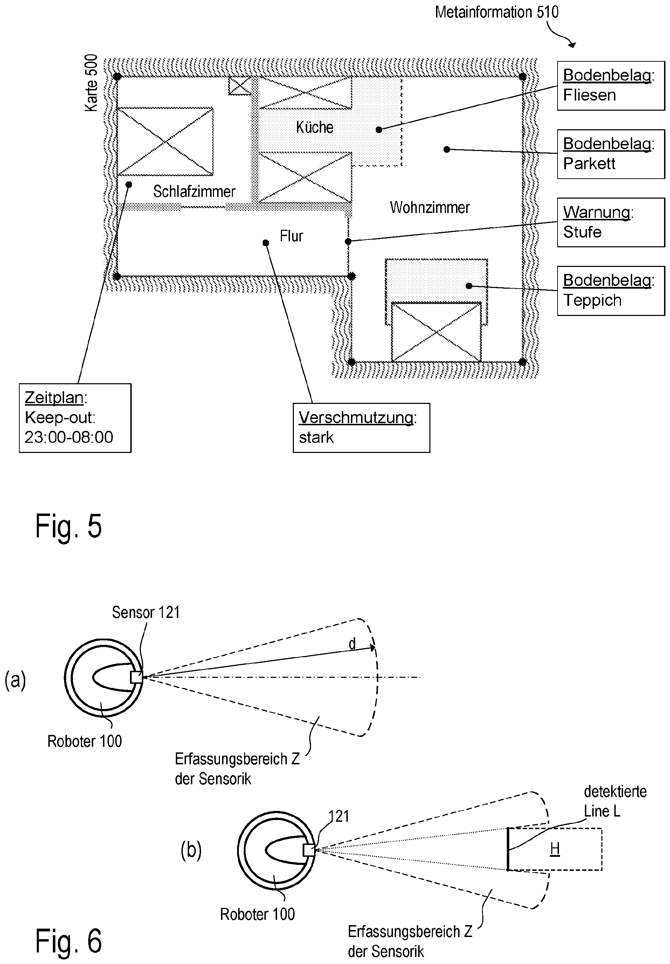

Figur 5 zeigt beispielhaft die Metainformationen 510 der permanent gespeicherten Karte 500 des Einsatzgebiets DA. Beispielhaft sind dargestellt: Benennung der Räume (z.B. "Flur", "Schlafzimmer", "Wohnzimmer", "Küche", etc. für eine natürliche Nutzer-Roboter-Interaktion), Zeitpläne (z.B. "*Keep-out* von 23 bis 6 Uhr" für eine Aufgabenplanung), Angaben zum Verschmutzungsgrad (z.B. üblicherweise starke Verschmutzung im Flur, Roboter reinigt öfter), Angaben zum Bodenbelag (z.B. "Parkett", "Fliesen", "Teppich", etc. und gegebenenfalls damit verbundene Arbeitsprogramme), Warnhinweise (z.B. "Stufe", Roboter fährt langsam), etc.

Eine Art von Metainformationen, die in einer Karte gespeichert werden können, sind die Aufteilung des Robotereinsatzgebietes in mehrere Räume und/oder Teilgebiete. Diese Aufteilung kann automatisiert durch den Roboter 100 erfolgen, wobei beispielsweise die Orientierungsinformationen und andere während der Erkundungsfahrt aufgenommene Informationen interpretiert bzw. analysiert werden. Zusätzlich oder alternativ kann der Nutzer die Aufteilung manuell vornehmen und/oder eine automatisiert vorgenommene Aufteilung manuell überarbeiten. Auch die Benennung der Räume (z.B. "Flur", "Wohnzimmer", "Schlafzimmer", etc.) kann wie erwähnt in den Metainformationen enthalten sein.

Für einen Raum und/oder Teilgebiet kann beispielsweise durch den Nutzer festgelegt werden, ob das Gebiet befahren werden darf oder nicht. Beispielsweise kann ein Teilgebiet als virtuellen Sperrbereich (*virtual exclusion region, keep-out region*) abgegrenzt werden, so dass dieses nicht selbstständig durch den Roboter befahren wird. Dies ist nützlich, wenn das Teilgebiet nicht sicher durch den Roboter befahren werden kann, oder der Roboter in diesem Teilgebiet den Nutzer stören würde.

Alternativ oder zusätzlich kann der Nutzer benutzerdefinierte Teilgebiete anlegen, bearbeiten und löschen. Benutzerdefinierte Teilgebiete können beispielsweise Bereiche definieren, die der Roboter nicht selbsttätig befahren darf (Sperrbereich), oder die der Nutzer regelmäßig oder gelegentlich gezielt reinigen lassen will.

Zu den Metainformationen können vom Roboter eindeutig identifizierbare Objekten z.B. mit deren Bedeutung und Bezeichnung gehören. Beispielsweise kann einem in der Karte eingetragenen Objekt ein oder mehrere Attribute (Eigenschaften) zugeordnet werden. So können beispielsweise in einer Karte verzeichnete Flächenelementen Attribute zur Befahrbarkeit ("frei", "durch Hindernis blockiert", "gesperrt"), zum Bearbeitungsstatus ("ungereinigt" oder "gereinigt"), des Bodenbelags ("Teppich", "Parkett", etc.) zugeordnet werden.

Zu den Metainformationen kann die befahrbare (für den Roboter zugängliche) und/oder die reinigbare Fläche gehören. Hierbei kann die Größe und/oder genaue Form und Abmessung der befahrbaren/reinigbaren Fläche für einzelne Teilgebiete und/oder das gesamte Einsatzgebiet des Roboters gespeichert werden. Diese Fläche kann als Referenz dienen, um beispielsweise ein Arbeitsergebnis (z.B. gereinigte Fläche vs. theoretisch reinigbare Fläche) zu beurteilen.

Wie erwähnt können Metainformationen auf einer Nutzereingabe und/oder einer Interpretation der in der Karte gespeicherten Orientierungsinformationen durch den Roboter (100) basieren. Zu den Metainformationen können folglich auch Gefahrenbereiche gehören. In diesen Bereichen können sich beispielsweise Hindernisse wie herumliegende Kabel befinden, welche die Navigations- und Bewegungsfähigkeit des Roboters stark einschränken. Deshalb können diese Bereiche durch den Roboter gemieden und/oder besonders vorsichtig befahren werden. Beispielsweise kann der Roboter einen solchen Bereich selbstständig erlernen, indem ein Navigations- und Bewegungsproblem, das während eines vorhergehenden Einsatzes (oder während einer Erkundungsfahrt) detektiert wurde, mit der entsprechenden Position verknüpft gespeichert wird. Alternativ können Gefahrenbereiche auch vom Nutzer definiert werden.

*Erkundungsfahrt zur Erstellung einer Karte* - Eine permanent gespeicherte Karte kann bei einem vorhergehenden Einsatz, beispielsweise einer Erkundungsfahrt, vom Roboter selber erstellt worden sein, oder von einem anderen Roboter und/oder einem Nutzer zur Verfügung gestellt werden und wird beispielsweise in einem Speicher 156 (vgl. Fig. 2) dauerhaft (permanent) gespeichert. Alternativ können die permanent zu speichernden Karten des Robotereinsatzgebiets auch außerhalb des Roboters gespeichert werden, beispielsweise auf einem Computer im Haushalt des Nutzers des Roboters (z.B. Tablet-PC, Home-Server) oder auf einem über das Internet erreichbaren Computer (z.B. Cloud-Server). Die Kartendaten werden beispielsweise vom Navigationsmodul 152 gespeichert und verwaltet.

Eine Erkundungsfahrt kann an einem beliebigen Punkt des Einsatzgebietes gestartet werden, wie beispielsweise von der Basisstation aus. Der Roboter hat am Anfang der Erkundungsfahrt keine oder nur sehr wenige Informationen über seine Umgebung. Während der Erkundungsfahrt bewegt sich der Roboter 100 durch das Einsatzgebiet und erfasst mit seinen Sensoren Informationen zur Struktur der Umgebung wie insbesondere die Position von Hindernisse oder andere Orientierungsinformationen und baut so die Karte auf. Beispielsweise werden Wände und andere Hindernisse (z.B. Möbel und andere Gegenstände) detektiert und deren Position und Lage in der Karte gespeichert. Die für die Detektion verwendete Sensorik ist an sich bekannt und kann in einer Sensoreinheit 120 des Roboters 100 enthalten sein (vgl. Fig. 2). Für die Detektion notwendige Berechnungen können von einem in der Steuereinheit 150 (vgl. Fig. 2) des Roboters 100 enthaltenen Prozessor durchgeführt werden. Beispielsweise wird fortlaufend gleichzeitig zur Kartenerstellung basierend auf der Bewegung des Roboters (insbesondere Odometriemessungen) und dem schon erkundeten (und daher bekannten) Teil der Karte die Position des Roboters in dieser Karte bestimmt (SLAM, *Simultaneous Localization and Mapping*). Ein derartiges Tracking der Position des Roboters während der Erstellung einer neuen Karte ist nicht mit der oben erwähnten Selbstlokalisierung (ohne Vorwissen betreffend die Roboterposition) in einer bereits vorhandenen zu verwechseln.

Die Erkundungsfahrt kann so lange durchgeführt werden, bis die Karte abgeschlossen ist. Das bedeutet beispielsweise, dass die vom Roboter befahrbare Fläche vollständig von Hindernissen umgeben ist (vgl. Fig. 4). Alternativ oder zusätzlich kann bestimmt werden, ob es neue Orientierungsinformationen gibt, und ob die bereits erfassten Orientierungsinformationen mit einer hinreichend hohen Genauigkeit bekannt sind. Die Genauigkeit kann beispielsweise im Rahmen eines probabilistischen SLAM-Verfahrens auf Basis der hierbei erfassten Wahrscheinlichkeiten, Varianzen und/oder Korrelationen bestimmt werden.

Zur Navigationsstrategie während der Erkundungsfahrt gibt es verschiedene Ansätze, die maßgeblich von den verwendeten Sensoren abhängen. Beispielsweise kann die Fläche vollständig abgefahren werden, was insbesondere bei kurzreichweitigen Sensoren zur Detektion von Hindernissen geeignet ist (Reichweite z.B. kleiner als 10 cm, oder kleiner als 1 m). Beispielsweise kann das Einsatzgebiet so abgefahren werden, dass alle Bereiche mit einem langreichweitigen Sensor (z.B. Reichweite größer 1 m) erfasst wurden. Beispielsweise können während der Erkundungsfahrt Räume und Türdurchgänge detektiert werden, und die Erkundung raumweise durchgeführt werden. Hierbei wird ein Raum vollständig erkundet, bevor die Erkundung des nächsten Raumes beginnt.

Die Diagramme in Fig. 6 illustrieren exemplarisch wie ein autonomer mobiler Roboter 100 seine Umgebung erkundet. In dem in Fig. 6, Diagramm (a), dargestellten Beispiel weist die Sensoreinheit 120 des Roboters 100 (siehe Fig. 2) einen Navigationssensor 121 auf, der einen definierten Erfassungsbereich Z (*coverage area*) abdeckt. Im dargestellten Beispiel hat der Erfassungsbereich Z näherungsweise die Form eines Kreissektors mit dem Radius d. Der Navigationssensor 121 ist dazu ausgebildet, Objekte (z.B. Hindernisse, Möbel und andere Gegenstände) in der Umgebung des Roboters 100 zu detektieren, indem er den Abstand zur Kontur eines Objekts misst, sobald ein Objekt innerhalb des Erfassungsbereichs Z des Sensors 121 liegt. Der Erfassungsbereich Z bewegt sich mit dem Roboter mit, und der Erfassungsbereich Z kann Objekte überlappen, wenn der Roboter ihnen näher kommt als die Distanz d. Fig. 6, Diagramm (b), zeigt eine Situation, in der ein Hindernis H sich innerhalb des Erfassungsbereichs Z des Navigationssensors 121 des Roboters befindet. Der Roboter kann einen Teil der Kontur des Hindernisses H erkennen, im vorliegenden Beispiel ist das die Linie L auf der dem Sensor 121 zugewandten Seite des Hindernisses H. Die Position der Linie L kann in der Karte gespeichert werden. Im Laufe der Erkundungsfahrt wird der Roboter das Hindernis H noch aus anderen Blickrichtungen detektieren, und so die Kontur des Hindernisses H in der Karte vervollständigen können.

In dem in Fig. 6 dargestellten Beispiel hat der Erfassungsbereich Z der Sensorik ein vergleichsweise kleines Blickfeld (Erfassungsbereich). Es gibt jedoch auch Sensoren, welche in der Lage sind, einen Bereich von 360° abzudecken. In diesem Fall, hat der Erfassungsbereich Z die Form eines (vollständigen) Kreises. Auch weitere Erfassungsbereiche sind je nach Sensor möglich und an sich bekannt. Insbesondere kann der Erfassungsbereich speziell bei Sensoren zur dreidimensionalen Erfassung der Umgebung durch ein Volumen wie beispielsweise einen Öffnungskegel definiert sein. Wenn der Sensor zusätzlich auf einem Aktor (insbesondere ein Motor) montiert ist, so kann der Erfassungsbereich sich relativ zum Roboter bewegen, wodurch der Roboter in verschiedene Richtungen "schauen" kann.

Der Erfassungsbereich Z ist nicht nur durch die Reichweite des Sensors gegeben sondern zusätzlich basierend auf der gewünschten Messgenauigkeit. Beispielsweise nimmt die Messunsicherheit bei Triangulationssensoren schnell mit dem gemessenen Abstand zu. Beispielsweise Ultraschallsensoren können Strukturen der Umgebung nur zuverlässig erfassen, wenn sie in einem geeigneten Abstand zu diesen Strukturen bewegt werden.

Für einige Sensoren kann der Erfassungsbereich Z auf die aktuelle Position des Roboters eingeschränkt sein. Beispielsweise sind übliche Bodensensoren, um eine Absturzkante am Boden (beispielsweise einer Treppenstufe) zu erkennen, unter dem Roboter oder unmittelbar vor dem Roboter zum Boden hin ausgerichtet, so dass der Erfassungsbereich nicht über die Position des Roboters hinaus geht. Ein weiteres Beispiel ist die Detektion einer Änderung des Bodenbelags. Eine solche Änderung kann beispielsweise durch eine kurzzeitige Lageänderung (z.B. beim Überfahren einer Teppichkante) und/oder einer Veränderung des Fahrverhalten (z.B. Drift und Schlupf auf Teppich, Rauheit der Oberfläche) während der Fahrt detektiert werden. Ein weiteres Beispiel sind Hindernisse, die der Roboter nur durch Berührung mit taktilen Sensoren wie z.B. Kontaktschaltern detektieren kann (z.B. optisch schwer erkennbare Hindernisse wie Glastüren).

Der Erfassungsbereich Z kann im Allgemeinen abhängig vom gewählten Sensor und seiner Anordnung am Roboter durch einen oder mehr Punkte, eine Strecke, eine Fläche oder ein Volumen beschrieben werden, welche/welches in geeigneter Weise relativ zum Roboter angeordnet ist.

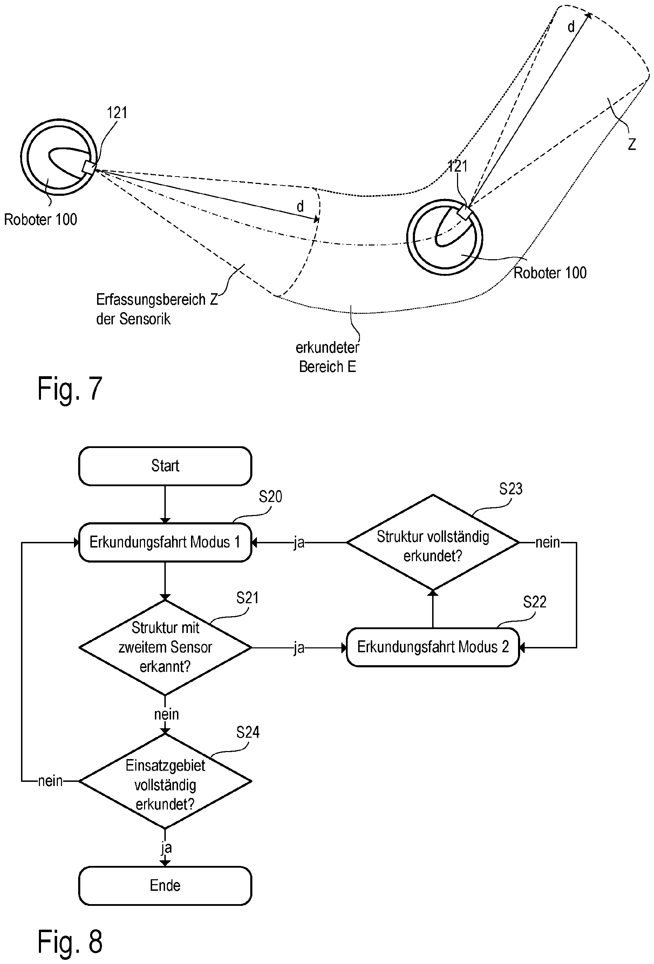

Wie in Fig. 7 gezeigt, kann der Erfassungsbereich Z in einer Karte als "erkundet" markiert werden. Somit "weiß" der Roboter, welche Bereiche des Robotereinsatzgebietes er bereits erkundet und somit kartiert hat. In dem in Fig. 7 dargestellten Beispiel umfasst der erkundete Bereich E alle Punkte des Robotereinsatzgebietes, die sich während der Erkundungsfahrt zumindest einmal in dem (mit dem Roboter 100 mitbewegten) Erfassungsbereich Z befunden haben. Der erkundete/durchsuchte Bereich E repräsentiert sozusagen die "Spur" des Erfassungsbereichs E des Sensors. Die nicht als erkundet markierten Bereiche der Karte können als "weiße Flecken" betrachtet werden, über die dem Roboter (noch) keine Informationen vorliegen. Es sei an dieser Stelle noch angemerkt, dass ein in dem Erfassungsbereich Z befindliches Objekt H einen Teil des Erfassungsbereichs abschattet und diesen effektiv kleiner machen (siehe Diagramm (b) in Fig. 6). In praktischen Implementierungen ist der Öffnungswinkel des Sichtfelds eines Sensors oft wesentliche größer als in Fig. 7 dargestellt.

*Fernfeld- und Nahfelderkundung* - Wie zuvor beschrieben, besitzen übliche Serviceroboter für den Haushaltsbereich einige kurzreichweitige Sensoren (*short range sensors*), die Strukturen der Umgebung wie z.B. Bodenbelagsgrenzen oder Absturzkanten nur beim Überfahren bzw. kurz vorher detektieren können. Der Erfassungsbereich Z entspricht für diese kurzreichweitigen Sensoren somit ungefähr der Größe des Roboters, weshalb bei einer Erkundungsfahrt zur Erfassung dieser Strukturen in der Regel die komplette Fläche des Einsatzgebiet abgefahren werden muss. Dies benötigt sehr viel Zeit und birgt die Gefahr, dass die Erkundungsfahrt durch eine unerwartete Störungen abgebrochen wird (z.B. Navigationsprobleme, Abbruch durch den Nutzer).

Dieses Problem wird gemindert, wenn der Roboter mit einem langreichweitige Sensor (*long range sensor*) mit entsprechend großem Erfassungsbereich Z (vgl. Fig. 6) die Erkundung durchführt. Hierdurch kann die Erkundung deutlich schneller beendet werden, da die Fläche nicht vollständig abgefahren werden muss, sondern die relevanten Orientierungsinformationen von einigen wenigen ausgewählten Bereichen aus erfasst werden können. Zusätzlich kann zu Bereichen, die zu Navigationsproblemen führen könnten (z.B. unmittelbare Nähe von Hindernissen), ein Sicherheitsabstand eingehalten werden. Ein möglicher Nachteil dieser Methode ist die fehlende Erkundung von Strukturen der Umgebung, die nur in der unmittelbaren Umgebung des Roboters und insbesondere beim Überfahren der Strukturen erkennbar sind.

Um die Erkundung schnell durchzuführen, und trotzdem alle interessanten Strukturen zu erfassen, kann der Roboter zwei Strategien kombinieren. Hierzu wird in einem ersten Modus (bzw. mit einer ersten Erkundungsstrategie) die Umgebung mit zumindest einem ersten Sensor, der eines ersten Erfassungsbereich Z1 aufweist, erkundet, wobei als erster Sensor insbesondere ein langreichweitiger Sensor verwendet wird. Die im ersten Modus verwendete Erkundungsstrategie kann hierbei darauf ausgelegt sein, das Einsatzgebiet möglichst schnell und effizient mit dem ersten Sensor zu erkunden. Der verwendete erste Sensor ist beispielsweise ein Sensor zum berührungslosen Messen von Abständen über größere Entfernungen wie z.B. ein optischer Triangulationssensor, ein Laserscanner, , sogenannte Range-Finder, eine Stereo-Kamera oder eine ToF-Kamera (*Time-of-Flight-*Kamera). Alternativ oder zusätzlich kann der erste Sensor eine Kamera sein, deren Bilder oder hieraus extrahierte Merkmale (Navigations-Features) zur Kartierung des Einsatzgebiets genutzt werden.

In der Regel wird der Roboter in diesem ersten Modus auch Informationen mit zumindest einem zweiten, kurzreichweitigen Sensor (z.B. ein Bodensensor zum Messen des Abstands zum Boden und detektieren einer Kante/Stufe, ein Sensoren zum Detektieren von Bodenbelagsgrenzen, ein Kontaktschalter zur Detektion von "unsichtbaren" Hindernissen wie Glastüren, etc.), der einen zweiten Erfassungsbereich Z2 aufweist, erfassen. Ein derartiger kurzreichweitiger Sensor detektiert beispielsweise nur Strukturen der Umgebung, wenn der Roboter in unmittelbarer Nähe (z.B. im Fall einer Absturzkante) der erwähnten Strukturen vorbei kommt oder sie überfährt (z.B. im Fall einer Bodenbelagsgrenze). Beispiele hierfür sind: Detektion eines Zusammenstoßes, Informationen zum Bodenbelag und/oder Bodenbelagsänderung (Bodenbelagsgrenze), Informationen zu einer Absturzkante unter oder unmittelbar vor dem Roboter, Informationen über Hindernisse mit einem kurzreichweitigen Annäherungssensor (*proximity sensor*)*,* Bilder der Bodenfläche unter oder der unmittelbaren Umgebung des Roboters.

In einem zweiten Modus kann der Roboter mit einer zweiten Erkundungsstrategie gezielt die Strukturen mit dem kurzreichweitigen Sensor erkunden. Dies geschieht beispielsweise durch verfolgen der Struktur durch den Raum. Dies ist insbesondere bei linienförmigen Strukturen wie Bodenbelagsgrenzen oder Absturzkanten von Vorteil.

Die beiden Erfassungsbereiche Z1, Z2 werden in der Regel zumindest teilweise disjunkt sein. Das heißt sie überlappen nicht oder nur teilweise. Durch Kombination der beiden Erfassungsbereiche Z1, Z2 unter Nutzung der beiden Erkundungsstrategien (Modi) kann eine Karte aufgebaut werden, die alle wesentlichen Strukturen der Umgebung des Einsatzgebiets enthält, ohne dass die Fläche vollständig abgefahren werden muss.

Der Wechsel von dem ersten Modus in den zweiten Modus kann beispielsweise sofort erfolgen, wenn im ersten Modus eine relevante Struktur mit dem zweiten Sensor detektiert wird (siehe auch Fig. 8). Nach dem Start erkundet der Roboter in Schritt S20 die Umgebung im ersten Modus (*Modus 1*) basierend auf Messungen mit einem langreichweitigen ersten Sensor, der einen ersten Typ von Strukturen detektieren kann wie z.B. die geometrische Struktur der Umgebung im Einsatzgebiet (d.h. als Hindernisse bezeichnete Objekte wie Wände, Türen, Möbel, etc.). Wenn hierbei die Prüfung in Schritt S21 ergibt, dass mit dem kurzreichweitigen zweiten Sensor eine Struktur eines zweiten Typs detektiert wurde (z.B. Bodenbelagsgrenze, Türschwelle, Stufe, etc.), so wechselt der Roboter in den zweiten Modus (*Modus 2*). In Schritt S22 wird die erkannte zweite Struktur erkundet, bis eine Prüfung (Schritt S23) ergibt, dass sie vollständig erkundet ist. In diesem Fall fährt der Roboter mit der Erkundung der geometrischen Struktur der Umgebung im ersten Modus fort (Schritt S20). Dies wird solange durchgeführt bis eine Prüfung (Schritt S24) ergibt, dass das Einsatzgebiet vollständig erkundet ist. Anschließend wird die Erkundungsfahrt beendet und der Roboter kehrt beispielsweise zu seiner Startposition zurück.

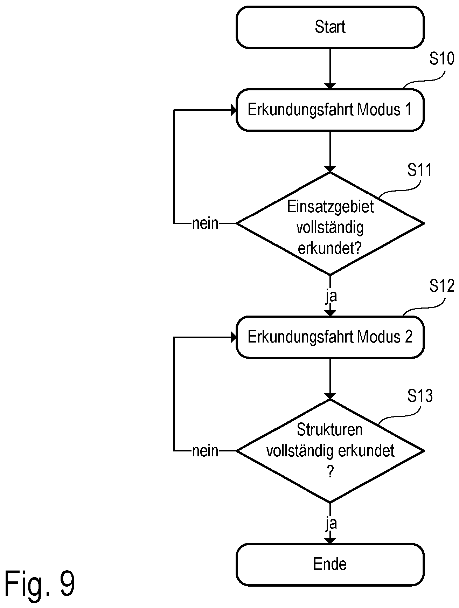

Alternativ oder zusätzlich kann die Erkundung im ersten Modus solange fortgesetzt werden, bis ein geeigneter Teilbereich (z.B. ein Raum) oder das gesamte Einsatzgebiet erkundet wurden (vgl. Fig. 9). Nach dem Start erkundet der Roboter in Schritt S10 die Umgebung im ersten Modus basierend auf Messungen mit einem langreichweitigen ersten Sensor. Hierbei können die Position der mit dem kurzreichweitigen zweiten Sensor erfassten Strukturen in die Karte eingezeichnet werden. Diese werden aber nicht weiter verfolgt. In Schritt S11 prüft der Roboter, ob die Erkundung (eines Raums oder des gesamten Einsatzgebietes) abgeschlossen wurde. Wenn dies nicht der Fall ist, wird die Erkundung im ersten Modus 1 (Schritt S10) fortgesetzt. Wenn die Erkundung im ersten Modus abgeschlossen ist, setzt der Roboter in Schritt S12 die Erkundung im zweiten Modus fort. Hierbei fährt der Roboter beispielsweise die im ersten Modus gespeicherten Positionen an, an denen der zweite Sensor eine Struktur detektiert hat. Ausgehend von dieser Position wird die Struktur gezielt vollständig erkundet, beispielsweise indem der Roboter versucht, der detektierten Struktur (z.B. Kante, Grenze eines Bodenbelags, etc.) zu folgen. Wenn in Schritt S13 festgestellt wird, dass alle zuvor erkannten Strukturen vollständig erkundet wurden, wird die Erkundungsfahrt beendet und der Roboter kehrt beispielsweise zu seiner Startposition zurück.

Diese Verfahren können bei Bedarf für weitere Sensoren (und weitere Modi) erweitert und kombiniert werden. Beispielsweise kann bei einer detektierten Absturzkante sofort von dem ersten Modus in einen zweiten Modus gewechselt werden, um so das Einsatzgebiet mit der Absturzkante sinnvoll abzuschließen. Beispielsweise kann bei einer detektierten Bodenbelagsgrenze die Erkundung im ersten Modus fortgesetzt werden, bis diese vollständig abgeschlossen ist. Auf Basis der dann bekannten Karte können anschließend die Bodenbelagsgrenzen vervollständigt werden. Das heißt, die Ansätze gemäß Fig. 8 und 9 sind kombinierbar.

Zusätzlich können im zweiten Modus Hypothesen über den Verlauf der mit dem zweiten Sensor erfassten Struktur der Umgebung erstellt werden. Ein Beispiel für eine solche Hypothese ist, dass ein Teppich eine rechteckige Form hat. Der Teppich kann beispielsweise frei im Raum liegen oder bis an ein Hindernis (z.B. Wand, Möbel) reichen. Alternative übliche Teppichformen sind Kreise, Ovale, oder Kreissegmente. Es gibt auch Teppiche (z.B. ein Tierfell) mit unregelmäßiger Form. Diese Hypothesen können im zweiten Modus gezielt getestet werden, indem eine Vorhersage über eine Sensormessung an einer spezifischen Position berechnet und durch Anfahren dieser Position getestet wird. Beispielsweise kann basierend auf der Hypothese eines rechteckigen Teppichs die Position der Ecken des Rechtecks bestimmt werden. Der Roboter kann nun diese Position anfahren und so die Hypothese bestätigen oder verwerfen. Wenn die Hypothese über die Form des Teppichs bestätigt wird, kann der Verlauf der Bodenbelagsgrenze zum Teppich in die Karte übernommen werden, ohne diesen vollständig abzufahren. Wenn die Hypothese verworfen wird, kann eine neue Hypothese erstellt und getestet werden oder die Bodenbelagsgrenze durch Abfahren vollständig erkundet werden.

Ein weiteres Beispiel für eine Hypothese ist der Verlauf von Türschwellen oder Bodenbelagsgrenzen in Türen. Diese verlaufen in der Regel geradlinig zwischen der Türzarge, häufig in Verlängerung einer Wand. Solche Hypothesen können beispielsweise getestet werden, wenn der Roboter einen Raum vollständig erkundet hat, und ihn wieder durch die Tür verlässt.

Ein Vorteil beim Erstellen von Hypothesen ist die Reduzierung der anzufahrenden Positionen, um eine mit dem zweiten Sensor erkannten Struktur vollständig zu kartieren. So kann bei einer erfolgreich getesteten Hypothese auf das vollständige Abfahren und Erkunden der Struktur verzichtet werden. Beispielsweise können bei einem rechteckigen Teppich die vier Ecken angefahren werden. Wenn diese sich an der erwarteten Position befinden, ist ein zusätzliches Erkunden der restlichen Teppichkante unnötig. Hierdurch kann sich die benötigte Zeit für die Erkundungsfahrt reduzieren, wodurch die Effizienz des Roboters steigt.

Während des ersten Modus (Erkundungsstrategie) können kleine Strukturen wie z.B. ein kleiner Teppich mit entsprechend kleinen Teppichkanten als Bodenbelagsgrenze übersehen werden, da der Roboter diese nicht befährt. In einer Wohnumgebung haben jedoch die typischen relevanten Strukturen typische Abmessungen (z.B. 2 m). Während der Erkundung im ersten Modus kann darauf geachtet werden, dass der Roboter mindestens einmal in die Nähe eines jeden erreichbaren Punkt des Einsatzgebiets fährt - also sich mindestens einmal auf eine vorgebbare Distanz (z.B. 1 m) nähert. So kann sichergestellt werden, dass die Existenz von Strukturen deren typische Abmessung dem doppelten der vorgegebenen Distanz entsprechen sicher mit dem zweiten Sensor erkannt werden, und nicht übersehen werden.

Dies kann durch eine Erfassung des abgefahrenen Weges des Roboters im ersten Modus erreicht werden. Alternativ oder zusätzlich kann der Roboter nach Abschluss der Erkundung im ersten Modus jene Punkte im Einsatzgebiet ansteuern, denen der Roboter sich während der Erkundung im ersten Modus nicht genügend angenähert hat. Eine weitere alternative Möglichkeit in die Nähe aller erreichbaren Punkte des Einsatzgebiets zu gelangen, ist eine virtuelle Verkleinerung des Erfassungsbereichs Z1, was z.B. durch eine entsprechende Programmierung der Steuereinheit 150 (z.B. des Navigationsmoduls 152) erreicht werden kann. Als Folge davon wird der Roboter näher an Punkte des Einsatzgebiets heranfahren als dies theoretisch notwendig wäre, um sie als erkundeten Bereich E zu markieren (vgl. Fig. 7). Zusätzlich oder alternativ kann, basierend auf der erfassten Position von Hindernissen (Wände, Möbel, etc.), eine Position mit einem geeigneten Abstand (basierend auf der typischen Abmessung der zu detektierenden Strukturen) zu den Hindernissen bestimmt und angefahren werden, um potentiell vorhandene Strukturen auch tatsächlich detektieren und im zweiten Modus weiter erkunden zu können.

*Fortsetzen einer Erkundung nach Unterbrechung (Continue-Exploration)* - Während einer Erkundungsfahrt kann es zu zahlreichen Problemen kommen, die die Navigation und Bewegung eines autonomen mobilen Roboters stören. Beispielsweise kann beim Überfahren einer Türschwelle starker Schlupf entstehen, was die Odometrie stört, so dass die Position des Roboters nicht mehr zuverlässig bestimmt werden kann. Ein weiteres Beispiel sind am Boden liegende Kabel, die die Fahrt des Roboters stören. Hierbei kann es sogar passieren, dass der Roboter hängen bleibt und sich nicht mehr bewegen kann. In solchen Fällen kann beispielsweise die Kartenerstellung pausiert (unterbrochen) werden, z.B. damit der Roboter sich befreien kann, und/oder damit der Nutzer den Roboter befreien kann. Wenn der Roboter seine Position wieder zuverlässig bestimmen kann, soll die Erkundungsfahrt zur Kartenerstellung fortgesetzt werden. Hierdurch soll vermieden werden, dass der Kartenaufbau vollständig neu begonnen werden muss. Somit wird die Zuverlässigkeit und Effizienz des Roboters gesteigert.

Hierbei ergeben sich zwei technische Problem. Zum einen kann es passieren, dass der Roboter in dem gleichen Bereich erneut hängen bleibt, wodurch der Kartenaufbau verzögert oder ganz unmöglich gemacht wird. Zum zweiten kann es passieren, dass das Navigations- bzw. Bewegungsproblem spät erkannt wird, dass der Kartenaufbau nicht rechtzeitig unterbrochen werden kann. Hierdurch können (zwischen dem Auftreten des Problems und dem Erkennen des Problems durch den Roboter) fehlerhafte Kartendaten aufgenommen werden, da z.B. der Roboter seine Position falsch geschätzt hat und somit die detektierten Umgebungsinformationen und insbesondere Orientierungsinformationen (z.B. Hindernisse, Landmarken, etc.) an einer falschen Stelle in die Karte einträgt. Solche Fehler sind bei einer temporär genutzten Karte (die bei jedem Einsatz neu aufgebaut wird) akzeptabel, da die Kartenfehler keinen Einfluss auf einem nachfolgenden Einsatz haben. Für eine dauerhaft zu nutzende Karte können solche Kartenfehler jedoch die Funktion des Roboters erheblich einschränken, weil diese Kartenfehler zu systematischen Fehlern in der Abarbeitung der Aufgaben des Roboters bei jedem nachfolgenden Einsatz führen können.

Es wird somit ein Verfahren benötigt, welches nicht nur die Fortsetzung der Erkundung und des Kartenaufbaus nach einem Navigations- bzw. Bewegungsproblem des Roboters ermöglicht, sondern auch robust mit Navigations- bzw. Bewegungsproblemen umgehen kann, so dass Fehler im Kartenaufbau vermieden werden. Dies kann beispielsweise dadurch gelöst werden, dass der Zeitpunkt und/oder der Ort (Problembereich) in dem das Problem aufgetreten ist, bestimmt wird. Ausgehend hiervon können beispielsweise fehlerhafte Daten gelöscht werden oder der Problembereich für die weitere Navigation gesperrt werden.

Es sei angemerkt, dass in einigen Fällen der Ort des Problems sehr gut lokalisiert werden kann. In diesem Fall kann der Problembereich auf einen Punkt in der Karte reduziert werden. Häufig ist die Lokalisierung des Problems nicht genau und/oder das Problem tritt in einem größeren Bereich auf. In diesem Fall kann der Problembereich ein Flächenstück oder ein Teilgebiet beschreiben.

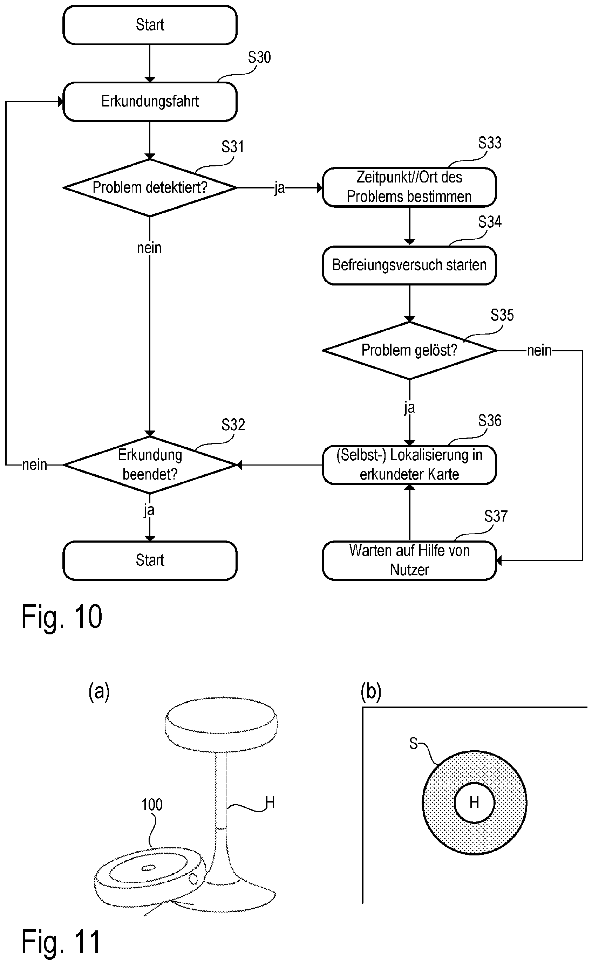

Figur 10 zeigt ein Beispiel einer möglichen Herangehensweise, ein Einsatzgebiet zu erkunden. Nach dem Start wird das Einsatzgebiet systematisch erkundet (siehe Fig. 10, S30). Hierbei kann beispielsweise eines der zuvor besprochenen Verfahren genutzt werden. Alternativ kann auch die Fläche vollständig abgefahren werden oder ein anderes geeignetes Verfahren zur Erkundung des Einsatzgebiets des Roboters genutzt werden. Solange kein Problem (insbesondere Navigations- bzw. Bewegungsproblem) detektiert wird (Fig. 10, Schritt S31) und das Einsatzgebiet nicht vollständig erkundet ist (Fig. 10, Schritt S32) wird diese Erkundungsfahrt fortgesetzt. Wenn festgestellt wird, dass das Einsatzgebiet vollständig erkundet ist (Fig. 10, Schritt S32), also beispielsweise es keinen für den Roboter erreichbaren, nicht erkundeten Bereich gibt, und/oder das in der Karte verzeichnete Einsatzgebiet vollständig von Hindernissen umgeben ist, so wird die Erkundungsfahrt beendet. Der Roboter kann nun zu seiner Startposition oder einer Basisstation zurückkehren und die erstellte Karte als permanente Karte speichern, um sie in nachfolgenden Einsätzen und für die Interaktion mit einem Nutzer zu verwenden.

Während der Erkundung können zahlreiche Probleme (wie zuvor beschrieben) auftreten und vom Roboter erkannt werden (Fig. 10, Schritt S31). Beispielsweise kann der Roboter eine Bewegung planen und versuchen, diese durchzuführen (durch Ansteuern der Antriebseinheit 170). Wenn beispielsweise die Antriebseinheit 170 blockiert ist, kann diese Bewegung nicht durchgeführt werden. Beispielsweise kann mit einem Odometer und/oder mit Inertialsensoren festgestellt werden, dass keine Bewegung erfolgte. Alternativ oder zusätzlich kann anhand der Leistungsaufnahme der Antriebseinheit das Problem erkannt werden. Beispielsweise kann bei einem Problem wie z.B. dem Hängenbleiben des Roboters die Leistungsaufnahme der Antriebseinheit ungewöhnlich hoch sein.

Ein ähnliches Problem entsteht bei Schlupf oder durchdrehenden Räder, so dass die gesteuerte Bewegung nur unvollständig oder auch gar nicht ausgeführt wird. Schlupf kann z.B. auftreten, wenn der Roboter eine Stufe oder Schwelle überfährt, aber auch wenn der Roboter an einem Hindernis wie herumliegenden Kabeln (z.B. Stromkabel für eine Stehlampe) hängen bleibt. Ebenfalls an Kabeln, Stufen oder Schwellen kann es zu starker Drift (z.B. einer ungesteuerten Seitwärtsbewegung) des Roboters kommen. Zusätzlich kann der Roboter, beim Versuch, Kabel, Stufen oder Schwellen zu überfahren, den Kontakt mit der Bodenfläche verlieren (insbesondere den Kontakt zwischen Antriebseinheit und Bodenfläche), wodurch eine weitere Bewegung nicht mehr oder nur schwer möglich ist. Im schlimmsten Fall sitzt der Roboter am Hindernis auf und hat keine Bodenhaftung mehr.

Ein weiteres Beispiel für eine ungesteuerte (d.h. nicht vom Roboter veranlasste) Bewegung ist ein Stoß von außen, beispielsweise aufgrund einer von außen auf den Roboter einwirkenden Kraft, die beispielsweise von Personen oder Haustiere, die mit einem neuen ungewohnten Roboter interagieren (z.B. spielen) wollen, ausgeübt werden kann. Beispielsweise kann es vorkommen, dass der Roboter angehoben, hochgehoben, oder an eine andere Stelle versetzt (sogenanntes Kidnapping) wird, wobei der Roboter ebenfalls den Kontakt zur Bodenfläche ganz oder teilweise verliert.

Ein weiteres Problem kann ein Einsperren des Roboters sein. Beispielsweise kann während der Roboter ein Zimmer erkundet, die Tür zum Zimmer geschlossen werden oder zufallen. Ein weiteres Beispiel ist, dass der Roboter unter ein Sofa fährt und anschließend die Sofadecke herunterrutscht. Diese wird als Hindernis erkannt, und der Roboter findet keinen Weg unter dem Sofa heraus, ohne mit einem Hindernis zu kollidieren. Fehlerhafte Messungen einer der Sensoren z.B. durch Spiegelungen können Hindernisse vortäuschen, die real nicht existieren, aber dem Roboter (in der Karte) den Weg scheinbar versperren. Dieses Problem kann dadurch erkannt werden, dass mit den kartierten Hindernissen kein Weg von der aktuellen Roboterposition in ein weiteres kartiertes Teilgebiet (insbesondere dem Startpunkt) geplant werden kann.

Alle diese Probleme führen dazu, dass die Position des Roboters nur mehr ungenau oder gar nicht mehr bekannt und/oder ein sinnvoller Kartenaufbau somit stark erschwert oder unmöglich ist. Beispielsweise kann der Kartenaufbau aus diesem Grund bei Detektion des Problems (Fig. 10, Schritt S31) ausgesetzt (pausiert) werden.

In einigen Fällen wird ein Problem nicht direkt erkannt (z.B. wenn es keinen geeigneten Sensor gibt, oder bei kleinen andauernden Störungen), weshalb eine fehlerhafte Karte aufgebaut wird. Die Fehler führen häufig zu inkonsistenten Kartendaten, die keine reale Umgebung beschreiben können. Wenn solche Inkonsistenzen erkannt werden, kann somit ebenfalls auf ein Navigations- bzw. Bewegungsproblem geschlossen werden. Eine Inkonsistenz kann beispielsweise daran erkannt werden, dass ein Hindernis mehrmals in der Karte (z.B. mit sich selbst überlappend oder hintereinander) eingetragen wird, da es nicht unmittelbar mit einem schon kartieren Hindernis assoziiert werden kann. Alternativ kann ein Hindernis mit einem in der Karte verzeichneten Hindernis assoziiert werden, wobei die kartierte Position von der gemessenen Position erheblich und wiederholt abweicht. Inkonsistenzen können auch daran erkannt werden, wenn ein neu in die Karte eingetragenes Navigationsfeature (Orientierungsinformation 505, siehe Fig. 4) "inkompatibel" mit einem bereits in der Karte vorhandenen Navigationsfeature ist (Orientierungsinformationen widersprüchlich sind und sich wechselseitig ausschließen).

Bei einigen Problemen, kann der Roboter nach der Lösung des Problems die Erkundungsfahrt selbstständig (ohne Interaktion eines Nutzers) fortsetzen. Jedoch besteht hierbei die Gefahr, dass er erneut auf das Problem stößt, und/oder dass während des Problems fehlerhafte Kartendaten erzeugt wurden. Um diesen Gefahren vorzubeugen kann der Roboter beispielsweise den Ort (Bereich) und/oder den Zeitpunkt des Problems versuchen einzugrenzen (Fig. 10, Schritt S33). Wenn das Problem gut mit einem Sensor detektiert werden kann (z.B. ein Stoß mit einem Beschleunigungsmesser) kann der Zeitpunkt TP1 der Detektion des Problems und die zu diesem Zeitpunkt TP1 bekannte Position des Roboters genutzt werden. Zusätzlich oder alternativ kann ein Zeitpunkt TP2, der eine festlegbare Zeitspanne vor dem Zeitpunkt TP1 der Detektion liegt, genutzt werden. Hierdurch können Verzögerungen bei der Detektion berücksichtigt werden.

Zur Bestimmung des Problembereichs kann beispielsweise die Position zum Zeitpunkt TP2 genutzt werden. Alternativ oder zusätzlich kann die letzte Position genutzt werden, die mit einer vorgebbaren Sicherheit bekannt ist. Ein Maß für die Genauigkeit/Sicherheit einer Position wird üblicherweise in einem SLAM-Verfahren erfasst, und wird reduziert, wenn unbekannte und/oder ungenaue Messungen auftreten. Um den Problembereich einzugrenzen, können diese Positionen verbunden werden. Zusätzlich kann ein Bereich um diese Positionen als Problembereich markiert werden. Beispielsweise ein Bereich mit den Abmessungen des Roboters.

Zusätzlich oder alternativ kann der Bereich basierend auf einer Kartenanalyse (z.B. einer Analyse auf logische Inkonsistenz der Kartendaten) ermittelt werden. So kann die Position inkonsistenter Daten bestimmt werden. Ausgehend hiervon kann beispielsweise der Zeitpunkt an denen die Daten erhoben wurden, bestimmt werden. Hierzu wird beispielsweise jeder Karteneintrag mit einem oder mehr Zeitstempeln versehen, der z.B. anzeigt, wann der Eintrag erstellt und/oder zuletzt durch Messung bestätigt wurde. Beispielsweise kann jeder Zeitpunkt einer Messung eines Karteneintrags oder die Häufigkeit, mit der ein Eintrag gemessen wurde, zusammen mit dem Eintrag gespeichert werden. Basierend auf dem Zeitpunkt kann wie zuvor beschrieben die Position des Roboters bestimmt werden, von denen er die Daten aufgenommen hat. Wenn beispielsweise eine Analyse ergibt, dass ein Hindernis mehrmals in die Karte eingetragen wurde, kann der Zeitpunkt des ersten Eintrags dieses Hindernis genutzt werden und/oder der Zeitpunkt des vorhergehenden Karteneintrags. Alternativ oder zusätzlich kann der Bereich bestimmt werden, von dem die Daten erhoben werden konnten.

Wenn der Roboter in einem Teilbereich eingesperrt wurde, so kann dieser Teilbereich als Problembereich markiert werden.

Für viele Navigations- bzw. Bewegungsprobleme gibt es mehrere Strategien zur Befreiung, welche angewendet werden können (Fig. 10, Schritt S34). Wenn der Roboter beispielsweise durch Überfahren eines niedrigen Hindernisses (z.B. Kabel, Stufen oder Schwellen) den Kontakt zum Boden zu verliert, so kann ein sofortiges Umkehren der Bewegungsrichtung ein Festfahren vermeiden. Wenn der Roboter sich festgefahren hat, so kann er mit schnellen ruckartigen Bewegungen eine Befreiung versuchen. Wenn der Roboter (scheinbar) in einem Teilbereich eingesperrt ist, so kann er versuchen auf Kontakt zu fahren und so einen Weg heraus zu finden. Insbesondere bei fehlerhaften Messungen (beispielsweise aufgrund von Reflexionen, welche eine optische Abstandsmessung z.B. mit einem Triangulationssensor stören) kann so das Problem häufig gelöst werden.

Wenn das Problem erfolgreich vom Roboter gelöst wurde (Fig. 10, Schritt S35), so kann er seine Position (erneut) in der bereits zumindest teilweise erkundeten Karte bestimmen (Fig. 10, Schritt S36). In einigen Fällen, wenn die Position des Roboters nach dem erfolgreichen Befreiungsversuch mit genügend Genauigkeit bekannt ist, kann hierbei die vorhandene Lokalisierung durch den SLAM-Algorithmus ausreichen.

Alternativ kann eine globale Selbstlokalisierung durchgeführt werden. Hierdurch kann die Position des Roboters deutlich genauer ermittelt werden, und Kartenfehler aufgrund ungenauer oder falscher Positionsschätzung des Roboters im SLAM-Algorithmus können vermieden werden. Jedoch benötigt eine globale Selbstlokalisierung einigen Zeit- und Rechenaufwand, so dass hier eine Abwägung getroffen werden muss. Beispielsweise kann abhängig von der Schwere des Problems bestimmt werden, ob der SLAM-Algorithmus ausreichend ist, oder eine globale Selbstlokalisierung durchgeführt werden soll.

Bei der globale Selbstlokalisierung kann beispielsweise das Vorwissen genutzt werden, dass der Roboter sich nach einer erfolgreichen Befreiung in der Nähe des ermittelten Problembereichs befindet. Beispielsweise kann der Roboter von dem Problembereich weg gesteuert werden. Zusätzlich kann der Lösungsraum (d.h. der Teil einer Karte, in der versucht wird, den Roboter zu lokalisieren) für die globale Selbstlokalisierung durch dieses Vorwissen sinnvoll eingeschränkt werden. Alternativ oder zusätzlich kann das Ergebnis der globalen Selbstlokalisierung genutzt werden, um die Position des Problembereichs zu ermitteln oder weiter einzugrenzen, da der Roboter sich nach einer erfolgreichen Befreiung und somit am Beginn der globalen Selbstlokalisierung in dessen Nähe befindet.

In einigen Fällen führt das Befreiungsmanöver (Fig. 10, Schritt S34) nicht zu einer Lösung des Problems. Dies wird beispielsweise dadurch ermittelt (Fig. 10, Schritt S35), dass das Problem nach einer gewissen Zeit noch immer besteht. In solch einem Fall bleibt der Roboter stehen und wartet auf die Hilfe des Nutzers (Fig. 10, Schritt S37). Dass der Roboter Hilfe benötigt, zeigt er beispielsweise durch akustische oder visuelle Signale an, die direkt vom Roboter ausgesandt werden. Alternativ oder zusätzlich kann der Nutzer durch eine entsprechende Nachricht an die externe HMI 200 (vgl. Fig. 2) informiert werden.

Der Nutzer kann nun den Roboter befreien und so das Problem lösen. In der Regel wird der Roboter hierbei durch den Nutzer angehoben und an einer neuen Stelle abgesetzt. Entsprechend kann der Roboter eine globale Selbstlokalisierung starten (Fig. 10, Schritt S36), wobei der Roboter seine Position relativ zu der schon (unvollständig) aufgebauten Karte 500 bestimmen kann. Methoden hierfür sind an sich bekannt. Beispielsweise baut der Roboter eine neue (temporäre) Karte 501 auf und sucht nach Übereinstimmungen mit der zuvor aufgebauten Karte 500. Sind die Übereinstimmungen eindeutig genug, können die Informationen der temporären Karte 501 in die Karte 500 übernommen und die Erkundungsfahrt fortgesetzt werden.

Alternativ oder zusätzlich kann es eine Anleitung an den Nutzer geben (z.B. an der HMI 200), den Roboter an einen bekannten Ort (schon in der Karte enthaltene Position) zu setzen. Dies ist beispielsweise die Startposition oder eine Position in der Nähe hiervon. Insbesondere kann die Startposition die Basisstation 110 sein. Wenn der Roboter auf die Basisstation 110 zurückgesetzt wird, kann alternativ auf eine globale Selbstlokalisierung verzichtet werden, wenn beispielsweise die Position der Basisstation in der Karte schon verzeichnet ist. Alternativ oder zusätzlich kann der Nutzer über die HMI dem Roboter auch mitteilen, an welchem Ort in der Karte das Problem aufgetreten ist. GGf. kann der Nutzer einen Sperrbereich um diesen Ort definieren, bevor der Roboter die Erkundung fortsetzt.

Es sei angemerkt, dass die Bestimmung des Problembereichs und/oder des Zeitpunktes des Problems (Fig. 10, Schritt S33) nicht zwingend unmittelbar nach der Detektion des Problems (Fig. 10, Schritt S31) stattfinden muss (wie im Beispiel von Fig. 10). Vielmehr kann sie beispielsweise auch nach einem Befreiungsversuch (S34), nach der Selbstlokalisierung (S36) oder einem anderen geeigneten Zeitpunkt durchgeführt werden. Beispielsweise kann auch der Nutzer gebeten werden den Problembereich in einer an der HMI 200 angezeigten Darstellung der (noch unvollständigen) Karte den Problembereich zu bestätigen und/oder zu markieren.

Dadurch, dass der Problembereich und/oder der Zeitpunkt des Problems bekannt ist, kann dies beim Kartenaufbau und der weiteren Erkundung des Einsatzgebiets (S30) genutzt werden. Zusätzlich kann zu dem Problembereich die Ursache des Problems (insofern aus der Detektion des Problems bekannt) gespeichert werden. So kann die Ursache (z.B. ungewöhnlich hoher Schlupf, Roboter blieb stecken) des Problems später bei einer Handhabung des so erkannten Problembereichs berücksichtigt werden.

Beispielsweise kann der Problembereich für das weitere Befahren gesperrt werden. Hierdurch kann das Problem zuverlässig gemieden werden. Alternativ kann der Bereich in der Karte mit Attributen wie z.B. "schwer zu befahren" oder "meiden" markiert werden. Diese Attribute kann der Roboter bei der Navigation berücksichtigen und der Roboter kann versuchen, den jeweiligen Bereich zu umfahren, so lange dies möglich ist. Im Gegensatz zu einem gesperrten Bereich (virtueller Sperrbereich) kann der Roboter durch einen Bereich mit dem Attribut "meiden" markierten Bereich fahren, wenn dies z.B. für den Abschluss der Erkundung notwendig ist.

Beispielsweise können manche Objekte wie z.B. Stuhl- oder Tischbeine oder Hocker oder andere Möbelstücke ungewöhnliche geometrische Formen aufweisen. So können z.B. Tischbeine, Stuhlbeine oder Barhocker sehr geschwungen geformt, so dass sie zu unerwarteten Navigations- bzw. Bewegungsproblemen führen. So kann beispielsweise ein sehr flach ansteigender Standfuß (häufig bei Barhockern oder Couchtischen) dazu führen, dass der Roboter auf diesen auffährt und so den Kontakt zum Boden verliert. Spitz zulaufende Beine können sich so verengen, dass der Roboter stecken bleibt, obwohl seine Sensoren hinreichend viel Platz für eine Navigation anzeigen.

Figur 11 illustriert in Diagramm (a) exemplarisch ein Navigations- bzw. Bewegungsproblem des Roboters an einem Barhocker H (oder ähnlichen Möbelstücken wie z.B. ein Tisch) und einen hiermit assoziierbaren Problembereich S (siehe Fig. 11, Diagramm (b)). Da solche Probleme bzw. Möbel meist mehrfach im Haushalt vorkommen, kann versucht werden, ein Navigations- bzw. Bewegungsproblem und den zugehörigen Problembereich mit einem durch den Roboter detektierbaren Objekt und/oder mit einem durch den Roboter detektierbaren Muster zu assoziieren. In Fig. 11 ist dies beispielsweise der vom Roboter detektierbare Teil des Fußes/Ständers des Barhockers H mit seinem spezifischen Radius. Hierzu können die bereits aufgenommene Karte und insbesondere Sensormessungen in der Umgebung des Problembereichs analysiert werden. Wenn dieses Objekt bzw. Muster nochmals detektiert wird, kann der Roboter einen entsprechenden Sicherheitsabstand hierzu einhalten. Beispielsweise kann ein Bereich S um das Objekt bzw. Muster als "gesperrt" oder als "zu meiden" markiert werden. Der Bereich kann basierend auf dem erkannten Problembereich bestimmt werden. Alternativ kann eine einfache Grundform (z.B. Kreis) gewählt werden.

Beispielsweise können vor dem Erkennen eines Problems falsche Kartendaten erzeugt worden sein. Die Berücksichtigung des Problembereichs kann z.B. dadurch erfolgen, dass Kartendaten, die ganz oder teilweise auf Messungen in dem Problembereich und/oder nach dem ermittelten Zeitpunkt des detektierten Problems basieren, gelöscht und/oder korrigiert werden. Dieser Teilbereich würde so bei einer Fortsetzung der Erkundungsfahrt nochmals erkundet werden (gegebenenfalls unter Beachtung der zuvor für den Problembereich gesetzten Attribute "gesperrt" oder "meiden").

Alternativ kann ohne ein Löschen von Kartendaten der Problembereich erneut erkundet werden. Beispielsweise kann der Roboter (wie zuvor beschrieben) erkennen, dass er in einem Bereich z.B. durch eine zugefallene Tür eingesperrt ist. Er würde nun den Nutzer benachrichtigen, so dass dieser z.B. durch Öffnen der Tür den Weg frei machen kann, um so den Roboter zu befreien. Anschließend kann der Nutzer dem Roboter über das HMI 200 mitteilen, dass die Erkundung fortgesetzt werden soll. In diesem Fall kann es nützlich sein, den Problembereich (also den Raum) nochmals ganz oder teilweise neu zu erkunden. So kann beispielsweise der Türdurchgang (die wieder geöffneten Tür) als frei durchfahrbar erkannt werden. Beispielsweise kann die erneute Erkundung des Problembereichs von dessen Rand erfolgen bzw. auf den Rand beschränkt werden (z.B. Suchen und Erkennen des Türdurchgangs).

Wenn der Nutzer den Roboter befreit, so kann der Nutzer das zugrunde liegende Problem gegebenenfalls beseitigen. Beispielsweise kann er herumliegende Kabel so verlegen, dass sie zukünftig den Roboter nicht mehr behindern. Beispielsweise können problematische Stühle und Hocker für die Erkundungsfahrt auf einem Tisch abgestellt werden, so dass sie zumindest vorübergehend kein Hindernis mehr darstellen. Andere Probleme wie Tischbeine kann der Nutzer jedoch nicht beseitigen.

Ein möglicher Ansatz, um das Verhalten und die Intention eines Nutzers zu erfassen, ist, diesem eine Nachricht mit einer entsprechenden Frage z.B. über die HMI 200 zu senden. So kann der Roboter z.B. auf eine Nutzereingabe warten, ob das Navigations- bzw. Bewegungsproblem dauerhaft oder vorübergehend behoben ist, oder ob vom Roboter erwartet wird, mit diesem Problem umzugehen. So kann beispielsweise die Berücksichtigung des Problembereichs abhängig von dieser Nutzereingabe erfolgen. Wenn das Problem dauerhaft beseitigt ist, kann die Problemstelle erneut erkundet und anschließend "vergessen" (nicht gespeichert) werden. Wenn das Problem vorübergehend beseitigt ist, kann die Problemstelle erneut erkundet werden. Zusätzlich kann der Roboter dem Nutzer vorschlagen (mittels der HMI), in diesem Bereich ein Teilgebiet zu erzeugen, was standardmäßig für die selbsttätige Befahrung durch den Roboter gesperrt ist. Bei Bedarf (z.B. wenn der Nutzer die Problem-Stühle weggeräumt hat) kann der Nutzer den Roboter gezielt in dieses Gebiet senden (z.B. zur Reinigung). Wenn der Roboter selber mit dem Problem umgehen muss, kann er einen Sperrbereich basierend auf dem erkannten Problembereich anlegen. Dieser kann dem Nutzer angezeigt werden. Zusätzlich kann auf eine Bestätigung durch den Nutzer gewartet werden.

*Erneute Erkundung eines kartierten Gebiets (Re-Exploration)* - Ein weiteres Problem mit permanent gespeicherten Karten ist der Umgang mit Veränderungen in der Umgebung. Diese können dauerhaft oder vorübergehend sein. Was hiervon dauerhaft oder doch nur vorübergehend ist, kann der Roboter aber nur schwer einschätzen. Man versucht dieses Problem in der Regel mit komplexen statistischen Modellen zu handhaben, sodass der Roboter mit der Zeit "dazu lernt".

Dabei werden jedoch sehr viele Daten erhoben, was die Navigation und Effizienz des Roboters negativ beeinflussen kann. Deshalb kann es sinnvoll sein, die Karte in regelmäßigen Abständen (z. B. nach größeren Änderungen) neu zu erkunden. Eine Neuerkundung des Einsatzgebietes und die damit einhergehende Neuerstellung der Karte hätte jedoch zur Folge, dass ein großer Teil der in der Karte gespeicherten Metainformationen, die mit der Zeit erlernt oder durch den Nutzer eingegeben wurden (z. B. Raumaufteilung, Raumnamen, Häufigkeit der Verschmutzung), verloren gehen. Insbesondere die Notwendigkeit, dass der Nutzer die verloren gegangenen Informationen erneut eingeben muss, kann als sehr störend empfunden werden. Um diese Situation zu verbessern, wird ein Verfahren benötigt, welches zum einen die Orientierungsinformationen 505 der Karte 500 zuverlässig aktualisiert, ohne jedoch die (insbesondere durch den Nutzer eingegebenen) Metainformationen 510 zu verlieren.

Die oben geschilderte Problematik kann beispielsweise dadurch gelöst werden, dass der Nutzer eine erneute Erkundungsfahrt des Roboters im gesamten oder einem Teil des Einsatzgebiets auslöst, wobei der Roboter während der Erkundungsfahrt die schon vorhandene permanent gespeicherte Karte nutzt. Gegebenenfalls kann der Nutzer vom Roboter vor Beginn der Erkundungsfahrt darauf hingewiesen werden, dass der erneut zu erkundende Bereich soweit aufgeräumt sein muss, dass die Navigation des Roboters nicht beeinträchtigt wird, so dass eine möglichst gute Karte erstellt werden kann. Anschließend kann der Roboter die erneute Erkundung von dem ihm zugewiesen Teil des Einsatzgebietes beginnen, wobei im Zuge der Erkundungsfahrt Informationen zur Struktur der Umgebung im Robotereinsatzgebiet mit Sensoren der Sensoreinheit 120 erfasst werden und Unterschiede zwischen den in der Karte bereits gespeicherten Orientierungsinformationen und den von den Sensoren der Sensoreinheit erfassten Informationen analysiert werden.

Hierdurch kann der Roboter eine aktualisierte Karte 502 des Einsatzgebietes erstellen. Beispielsweise kann der Roboter basierend auf den von den Sensoren erfassten (Orientierungs-) Informationen ein Objekt erkennen, das noch nicht in der Karte gespeichert ist, oder erkennen, dass ein in der Karte gespeichertes Objekt nicht mehr vorhanden ist (weil die Sensoren keine korrespondierende Orientierungsinformation mehr liefern). Der Roboter kann auch erkennen, dass ein Objekt verschoben wurde und die in der Karte gespeicherten Orientierungsinformation entsprechend anpassen. Dieser Ansatz bietet den Vorteil, dass Metainformationen leicht in die aktualisierte Karte übernommen werden können und somit nicht verloren geht. Bei einfacheren Ansätzen, bei denen schlicht eine neue Karte ohne Berücksichtigung der alten Karte erstellt wird, ist dies nicht der Fall und Metainformationen gehen verloren. Die so aktualisierte Karte 502 kann nun dauerhaft gespeichert und in nachfolgenden Einsätzen des Roboters für die Navigation und Nutzerinteraktion genutzt werden. Die zuvor vorhandene Karte 500 kann hierdurch vollständig ersetzt werden. Zusätzlich oder alternativ kann ein Backup der Karte 500 behalten werden. Dieses kann beispielsweise auf einem externen Gerät 300 (z. B. Cloud- Server) gespeichert werden.

Die vom Nutzer gewünschte erneute Erkundung kann das gesamte Einsatzgebiet oder nur einen Teil des Einsatzgebiets umfassen. Dies kann er beispielsweise über die HMI 200 dem Roboter mitteilen (z.B. über ein über die HMI eingegebenes Kommando). Beispielsweise kann die Erkundung auf einen Raum beschränkt werden, wobei der Nutzer den Raum beispielsweise über eine auf dem HMI angezeigten Karte oder über den Namen des Raumes auswählen kann. Beispielsweise kann der Nutzer einen Bereich in einer auf der HMI 200 angezeigten Karte markieren, den er neu erkundet haben will.

Beim Erkunden kann sich der Roboter so in dem zu erkundenden Teil des Einsatzgebiets bewegen, dass dieses vollständig mit dem in der Sensoreinheit enthaltenen Sensor (bzw. Sensoren) erfasst wird. Zusätzlich kann die Messgenauigkeit zur Erfassung der Informationen variiert werden. So können erkannte Änderungen genauer vermessen werden, während bei unveränderten Teilen des Einsatzgebiets eine eher grobe Messgenauigkeit genügen kann. Mögliche Strategien werden später noch genauer beschrieben. Die Messgenauigkeit kann beispielsweise durch eines der Folgenden erhöht werden: Erhöhen der Verweildauer in einem Bereich, dichteres Heranfahren ein Hindernis, Vergrößern der abgefahrenen Fläche des Roboters während der Erkundung, längere Messdauer, reduzierte Fahrgeschwindigkeit.

Wenn der Nutzer eine erneute Erkundung nur in einem Teilbereich (z.B. einem Raum) wünscht, können für die aktualisierte Karte nur in diesem Teilbereich oder Raum erkannte Änderungen berücksichtigt werden. Dies bedeutet, dass während der Fahrt zu dem neu zu erkundenden Teilbereich erkannte Abweichungen zwischen der Karte und der tatsächlichen (von den Sensoren gesehenen) Umgebung ignoriert werden. Hierdurch muss der Nutzer nur den erneut zu erkundenden Teilbereich für die Erkundung vorbereiten (aufräumen).

Zusätzlich kann sich das Einsatzgebiet gegenüber der ursprünglichen Karte 500 erweitert haben. Hier muss darauf geachtet werden, dass die aktualisierte Karte diese Erweiterung vollständig erfasst, so dass erneut eine abgeschlossene Karte entsteht.

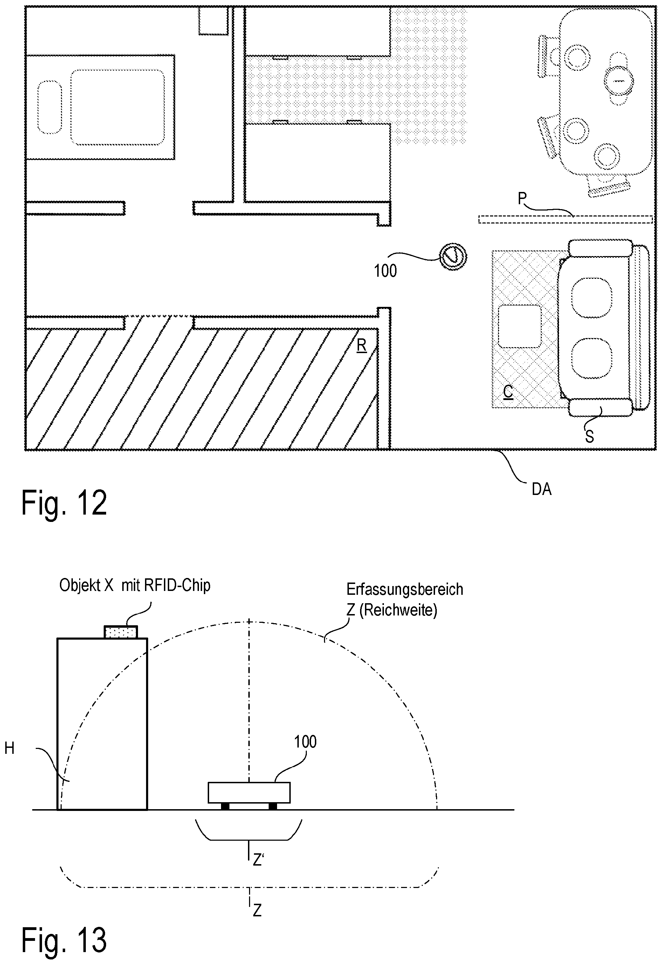

Im Allgemeinen kann bei einer erneuten Erkundungsfahrt das Einsatzgebiet grö-ßer und/oder kleiner sein als in der Karte 500 verzeichnet. Häufig sind die Ursachen hierfür neue Möbel (Einsatzgebiet wird beschränkt), entfernte Möbel (Einsatzgebiet wird erweitert) oder verschobene Möbel (Einsatzgebiet wird an einer Stelle erweitert und an anderer Stelle beschränkt). Zusätzlich oder alternativ kann der Nutzer beispielsweise entscheiden, einen zuvor nicht kartierten Raum für den Roboter zu öffnen. Fig. 12 zeigt beispielhaft mögliche Änderungen des Einsatzgebietes aus Fig. 3. So wurde die Couch S und der davor liegende Teppich C neu positioniert, und ein neuer Raum R wurde für den Roboter 100 zugänglich gemacht. Dies erfordert die Anpassung von zumindest einigen der Metainformationen. Hierfür ist es notwendig die Änderungen im Einsatzgebiet zu erkennen und zu analysieren.

Um die aktualisierte Karte 502 zu erstellen, können die Änderungen im Einsatzgebiet im Vergleich zu dem Zeitpunkt, zu dem die bereits vorhandene Karte 500 erstellt wurde, ermittelt werden. Hierbei werden insbesondere die während der Erkundung aufgenommenen und in einer neuen temporären Karte gespeicherten Informationen zur Struktur der Umgebung und die in der vorhandenen Karte 500 enthaltenen Orientierungsinformationen (z.B. detektierte Wände, Hindernisse und andere Landmarken) verglichen. Alternativ oder zusätzlich kann zu Beginn der Erkundungsfahrt eine Kopie 501 der permanent gespeicherten Karte 500 erstellt werden (insbesondere im Arbeitsspeicher des Prozessors 155), wobei der Roboter 100 seine Position in dieser bestimmt (z. B. mit Basisstation als Ausgangspunkt oder mittels einer globalen Selbst-Lokalisierung). Während der erneuten Erkundung können die Informationen direkt in dieser Arbeitskopie 501 aktualisiert werden. Es werden also insbesondere nicht mehr vorhanden Hindernisse und/oder Landmarken gelöscht, neue Hindernisse und/oder Landmarken hinzugefügt und wiedererkannte Hindernisse und/oder Landmarken bestätigt. Nach Abschluss der erneuten Erkundung kann die so erstellte Arbeitskopie 501 mit der noch vorhanden Karte 500 verglichen werden. Alternativ oder zusätzlich können die zu löschenden und die hinzugefügten Daten direkt zum Zwecke der Ermittlung der Änderungen genutzt werden. Wenn z.B. ein neu erkanntes Hindernis zu der Karte hinzugefügt wird, so wird zusätzlich eine Information vermerkt, dass dies neu hinzugekommen ist (z.B. Markierung mit einem Zeitstempel).

Zusätzlich müssen für die geänderten Bereiche zumindest einige der Metainformationen aktualisiert werden. Dies umfasst den für die Verrichtung von Serviceaufgaben des autonomen mobilen Roboters zu verwendenden Bereich (z.B. geändertes Reinigungsgebiet, neue zu inspizierende Objekte) sowie die Form, die Größe und die Anzahl der Teilgebiete und/oder Räume. Zusätzlich können die für eine Arbeitsplanung angelegten Kalenderinformationen angepasst werden. Beispielsweise muss ein neu hinzugefügter Raum in den Aufgabenplan (*task schedule*) integriert werden (z.B. für Reinigung und/oder Inspektion). Zusätzlich müssen Referenzwerte über die geplante Einsatzdauer und/oder die zu reinigende Fläche basierend auf den neuen Informationen angepasst werden.

Zusätzlich oder alternativ kann der Bodenbelag für neu hinzugekommene Flächen eingetragen werden. Dies kann beispielsweise durch Messung von Bodenbelagsgrenzen und des zuvor in der Karte verzeichneten Bodenbelags bestimmt werden. Beispielsweise kann ein Schrank in einem Zimmer vom Nutzer umgestellt oder entfernt worden sein. Hierdurch ist ein neuer Flächenbereich für den Roboter entstanden, dem ein Bodenbelag zugeordnet werden kann. Wenn zu diesem neuen Flächenbereich keine Bodenbelagsgrenze detektiert werden kann, so kann die Information zum Bodenbelag des umliegenden Bereichs auf den neuen Flächenbereich übertragen werden. Wenn eine Bodenbelagsgrenze festgestellt wird, kann für den neuen Flächenbereich der Bodenbelag automatisiert bestimmt oder durch den Nutzer eingetragen werden. Ein mit diesem Bodenbelag verknüpftes Reinigungsprogramm kann hierdurch automatisch für das neu erkannte Flächenstück angewendet werden. Zusätzlich oder alternativ kann ein für den umliegenden Bereich spezifiziertes Reinigungsprogramm von dem umliegenden Bereich auf den neuen Flächenbereich übertragen werden.

Beispielsweise kann der Roboter erkennen, dass sich Bodenbelagsgrenzen wie beispielsweise durch den Teppich C in dem Beispiel aus Fig. 12 verschoben haben. Wenn hierbei die Abmessungen (z. B. Länge, Breite, Höhe des Teppichs C) unverändert bleiben, kann die Information zum Bodenbelag aus der zuvor vorhanden Karte 500 in die aktualisierte Karte 502 übernommen werden, wobei die Positionsdaten aktualisiert werden. Zusätzlich kann der Teppich C mit einem vom Nutzer angelegten Teilgebiet assoziiert sein. Die Position dieses Teilgebietes kann ebenfalls an die neue Position des Teppichs C z. B. basierend auf den Bodenbelagsgrenzen automatisch aktualisiert werden.

Beispielsweise können mit Hindernissen oder Objekten verknüpfte Gefahrenbereiche ebenfalls aktualisiert werden. Des Weiteren kann der in Fig. 12 gezeigte Teppich C an einer Seite mit langen Fransen versehen sein, die bei einer Reinigung eine rotierende Bürste blockieren können. Deshalb kann in der ursprünglichen Karte 500 diese Seite so gekennzeichnet sein, dass sie nur mit abgeschalteten Bürsten gereinigt wird. Diese Metainformation (z.B. als Attribut des Teilgebiets in der Karte gespeichert) kann ebenfalls an die neue Position des Teppichs C übertragen werden. Das heißt, Metainformation, die das Verhalten bzw. den Betrieb der Serviceeinheit 160 betreffen, kann ebenfalls automatisch an das aktualisierte Teilgebiet (das in diesem Beispiel durch den Teppich C definiert ist) angepasst werden.

Die Aktualisierungen der Metainformationen können automatisiert oder mit Hilfe des Nutzers durchgeführt werden. In einer einfachen Variante kann der Roboter selbst erkennen, ob und ggf. welche Metainformationen aktualisiert werden müssen. Daraufhin kann eine Nachricht an den Nutzer gesandt werden mit der Aufforderung, die spezifizierten Informationen zu aktualisieren, bzw. an seine Erfordernisse anzupassen. Alternativ oder zusätzlich kann der Roboter einen Vorschlag zur Aktualisierung erstellen und an den Nutzer zur Bestätigung und/oder Anpassung senden. Insbesondere kann hierfür die aktualisierte Karte 502 an die HMI 200 übermittelt werden. Dieses kann beispielsweise die zu aktualisierenden Metainformationen z. B. mit einer Kartendarstellung dem Nutzer anzeigen. Der Nutzer kann diese nun akzeptieren, korrigieren oder verwerfen. Alternativ oder zusätzlich kann die Aktualisierung vollständig automatisiert erfolgen, ohne dass der Nutzer die Änderung bestätigen muss.

*Beispiel "neues Zimmer"* - Wie in Fig. 12 gezeigt, kann der Nutzer beispielsweise einen neuen Raum R für den Roboter zugänglich machen. Dieser ist bisher nicht in der permanenten Karte des Roboters 100 verzeichnet. Da ein in der Karte nicht verzeichneter Bereich eine potenzielle Gefahr für den Roboter darstellt (beispielsweise bei einer offen stehenden Haustür ein Außenbereich), kann ein nicht in der Karte verzeichneter aber zugänglicher Bereich (z.B. aufgrund einer offenen Tür) während Arbeitseinsätzen des Roboters ignoriert werden.

Durch eine erneute Erkundungsfahrt des Roboters 100 in dem Einsatzgebiet DA kann die Karte so erweitert werden, dass der Raum R in der aktualisierten Karte eingetragen ist und somit bei zukünftigen Einsätzen mit berücksichtigt und eingeplant werden kann. Um die erneute Erkundungsfahrt zu starten, kann der Nutzer das Einsatzgebiet DA komplett neu erkunden lassen und/oder einen Teilbereich für die Erkundung auswählen. Beispielsweise kann der Nutzer den Roboter 100 zu einem Punkt vor der geöffneten Tür zu dem Raum R senden. Der Roboter würde dann von diesem Punkt aus seine Umgebung erkunden, und unmittelbar erkennen, dass das kartierte Einsatzgebiet nicht mehr abgeschlossen ist. Vielmehr kann er nun den hinter der Tür liegenden Raum R als befahrbare Fläche erkennen, und er wird diesen Raum R erkunden und seine Karte entsprechend ergänzen. Die Orientierungsinformationen (d.h. detektierte Wände, Hindernisse und andere Landmarken) betreffend den neuen Raum R (einschließlich der Information über den nun offenen Türdurchgang) werden in die aktualisierte Karte 502 eingetragen. Die restlichen Orientierungsinformationen können unverändert in die aktualisierte Karte übernommen werden.

Die Metainformation können ebenfalls weitgehend unverändert übernommen werden, müssen aber um Informationen betreffend den neuen Raum R ergänzt werden. Beispielsweise wird ein neues mit dem Raum R assoziiertes Teilgebiet erzeugt. Dieses neue Teilgebiet kann beispielsweise in einem (z.B. in einem Kalender hinterlegten) Aufgabenplan hinzugefügt werden. So kann bei einer Reinigung der kompletten Wohnung nun der neue Raum R mit eingeplant werden. Beispielsweise kann der neue Raum R bei einer zukünftigen Reinigung als letzter eingeplant werden. Beispielsweise können bei der Erkundung zu inspizierende Gegenstände erkannt worden sein und für eine Inspektionsfahrt mit eingeplant werden.

*Beispiel "Änderung eines Zimmers"* - In einem großem Raum (z. B. "Wohnzimmer") steht ein Raumteiler P (in Fig. 12 durch gestrichelte Linie angedeutet), der den Raum in zwei Teilgebiet (z. B. "Essbereich" und "Wohnbereich") trennt. Der Roboter reinigt die beiden Teilgebiete somit getrennt (z.B. nacheinander). Beispielsweise kann der Nutzer entscheiden, den Raumteiler zu entfernen oder zu verschieben. Der Roboter würde zwar prinzipiell während der Navigation erkennen, dass der Raumteiler P fehlt, jedoch weiterhin die beiden Teilbereiche getrennt reinigen. Die getrennte Reinigung eines großen Raumes ist meist ineffizienter und kann von einem Nutzer als störend empfunden werden.

Der Nutzer kann nun den Roboter anweisen, beide oder nur eines der beiden Teilgebiete "Essbereich" und "Wohnbereich" neu zu erkunden. Im Zuge der Erkundungsfahrt oder nach der erneuten Erkundung kann der Roboter feststellen, dass der Raumteiler durch den Nutzer entfernt wurde. Aufgrund der expliziten Nutzeranweisung ist sichergestellt, dass dies keine vorübergehende sondern eine dauerhafte Änderung ist. Basierend auf den während der Erkundung aktualisierten Kartendaten zur Position von Hindernissen kann der Roboter erkennen, dass aufgrund des nicht mehr vorhandenen Raumteiler P eine große frei Fläche entstanden ist, die effizient in einem Durchgang gereinigt werden kann. Beispielsweise können nun automatisiert oder durch Vorschlag an den Nutzer die beiden Teilgebiet "Essbereich" und "Wohnbereich" zu einem den gesamten Raum umfassenden Teilgebiet "Wohn-/Essbereich" zusammengefasst werden.

Wenn es einen die beiden Teilgebiete "Essbereich" und "Wohnbereich" betreffenden Aufgabenplan gibt, so kann dieser ebenfalls automatisiert oder durch Hinweis an den Nutzer angepasst werden. Beispielsweise kann in dem Kalender eine Reinigung von "Wohnbereich" und eine Reinigung von "Essbereich" im Verlaufe eines Tages eingeplant sein. Diese beiden Kalendereinträge können gelöscht und durch einen einzelnen Eintrag für die Reinigung des neuen Teilgebietes "Ess- und Wohnbereich" ersetzt werden. Hierdurch kann beispielsweise die gesamte Reinigungsplanung des Tages schneller und effizienter werden.

Zusätzlich kann festgestellt werden, dass der "Essbereich" häufiger gereinigt wird. Dies kann beispielsweise anhand des im Kalender hinterlegten Aufgabenplans oder basierend auf statistischen Informationen zur Häufigkeit der Reinigung oder zur mittleren Verschmutzung ermittelt werden. Beispielsweise kann automatisiert oder durch Vorschlag an den Nutzer der Teilbereich "Essbereich" als zusätzliches Teilgebiet, welches mit dem Teilgebiet "Wohn-/Essbereich" überlappt, beibehalten werden. Dies ermöglicht weiterhin eine häufigere Reinigung (manuell oder automatisch gestartet) des "Essbereichs" während gleichzeitig die Reinigung des gesamten Raumes "Wohnzimmer" (= " Wohn-/Essbereich ") effizient an die geänderten Bedingungen angepasst ist.

*Beispiel "Neue Wohnung" -* Im Folgenden wird eine Situation betrachtet, in der der Nutzer in eine neue Wohnung einzieht. Bevor er die Wohnung mit seinen Möbeln einrichtet, lässt er die leere Wohnung durch den Roboter erkunden. Hierdurch kann der Roboter eine sehr einfache Karte erstellen, in der die Raumaufteilung gut ermittelbar ist. Zusätzlich erhält der Nutzer eine genaue Abmessung der Wohnung, die er für die Einrichtung der Wohnung nutzen kann. Zudem kann er diese Informationen mit Informationen des Verkäufers oder Vermieters der Wohnung vergleichen und auf Korrektheit überprüfen.

Nach dem Einzug lässt der Nutzer den Roboter die Wohnung nochmals erkunden. Hierdurch kann die Position von Einrichtungsgegenständen (Möbel) in die Karte eingetragen werden. Zusätzlich enthält die Karte weiterhin die Informationen über die zuvor ermittelte Raumaufteilung. Jedoch kann nun die Information über die befahrbare Fläche (Metainformation) angepasst werden.

*Strategie zur Erkundung mit bekannter Karte als Suchfunktion* - Ein spezielles Problem der Erkundung einer an sich bekannten Karte ist, dass der Roboter keinen Anhaltspunkt hat, wo und wie er nach Änderungen suchen soll. Bei der Erstellung einer neuen Karte wird diese so lange erkundet, bis sie vollständig abgeschlossen ist. Beim Erledigen einer Serviceaufgabe kann eine Aktualisierung während der für die Aufgabe notwendigen Navigation erfolgen. Beispielsweise erkennt der Roboter eine geschlossene Tür beim Vorbeifahren und kann daher in dem hinter der Tür liegenden Teilgebiet (z.B. ein Raum) keine Aufgaben erledigen, da dieses nicht erreichbar ist. Diese Aktualisierung geschieht jedoch nicht geplant, sondern eher zufällig nebenher. Es besteht somit der Bedarf nach einem Verfahren, mit dem der Roboter systematisch nach Änderungen in seinem Einsatzgebiet gegenüber der permanent gespeicherten Karte suchen kann. Solch ein Suchverfahren kann in ähnlicher Weise genutzt werden, um andere Ereignisse, Objekte oder Personen systematisch zu suchen.

Für die Suche hat der Roboter einen geeigneten Sensor (in der Sensoreinheit 120, vgl. Fig. 2) und gegebenenfalls Auswertealgorithmen, um das gesuchte Ereignis, Objekt oder Person zu erkennen. Beispielsweise ist der Sensor ein Navigationssensor 121 (siehe Fig. 6) und/oder ein anderer Sensor zum Erfassen von Informationen über die Struktur der Umgebung. Mit diesem Sensor kann der Roboter z.B. das Ereignis "Veränderung im Einsatzgebiet" erkennen. Dies geschieht insbesondere durch Vergleich der gemessenen Information betreffend die Struktur der Umgebung im Einsatzgebiet mit den in der Karte gespeicherten Informationen. Wie zuvor beschrieben, kann dies für die Aktualisierung der Karte genutzt werden. Wenn ein neuer in der Karte nicht verzeichneter Bereich (z. B. neuer Raum) oder ein neues Hindernis entdeckt wird, können diese mit einem der zuvor besprochenen Strategien weiter erkundet werden.

Um spezifische Objekte zu erkennen, können die Informationen zur Struktur der Umgebung auf ein vorgebbares Muster untersucht werden. So können spezifische Objekte und/oder speziell markierte Objekte erkannt werden. Beispielsweise kann so ein Objekt an seiner charakteristischen Form wie insbesondere seiner Länge, Breite und/oder spezifischen Ausformung erkannt werden, die beispielsweise mittels Abstandsmessung ermittelt werden. Beispielsweise kann so mit einer Kamera und Objekterkennung das gesuchte Objekt erkannt werden. Zusätzlich oder alternativ kann das gesuchte Objekt mit einem optisch detektierbaren Muster (z. B. QR-Code) markiert werden, welcher in den Bildern einer Kamera erkannt werden kann. Zusätzlich oder alternativ kann der Roboter einen Sensor besitzen, um mit RFID-Chips markierte Objekte zu erkennen.

Zusätzlich oder alternativ kann der Roboter dazu ausgelegt sein, gesuchte Objekte bzw. Gegenstände in Bildern zu erkennen. Beispielsweise kann der Roboter Gesichter in Bildern erkennen und so Personen oder Haustiere suchen. Hierfür geeignete Bildverarbeitungsalgorithmen sind an sich bekannt. Personen oder Haustiere oder bestimmte Objekte wie z.B. ein heißer Herd oder eine brennende Kerze können alternativ an ihrer ausgesandten Wärmestrahlung erkannt werden. Zusätzlich oder alternativ können mittels 3D-Messungen Personen, Tiere oder Gegenstände an ihrer spezifischen dreidimensionalen Form erkannt werden.

Ähnlich wie bei dem zuvor besprochenen Verfahren zur Erkundung eines Einsatzgebiets, um eine Karte des Einsatzgebiets aufzubauen, kann dem Sensor ein Erfassungsbereich zugeordnet werden, in dem das gesuchte Ereignis oder Objekt sicher erkannt (d.h. mit einer gewissen Genauigkeit detektiert und lokalisiert) werden kann (vgl. Fig. 6). Ein wichtiger Unterschied ist, dass nun die Karte zur Verfügung steht und nicht neu aufgebaut werden muss. Der Erfassungsbereich kann von der Art des gesuchten Ereignisses oder Objekts abhängen, und insbesondere von der benötigten Messgenauigkeit oder Auflösung. Wenn eine hohe Messgenauigkeit erforderlich ist, muss der Roboter in der Regel näher an das zu detektierende Ereignis bzw. Objekt heranfahren (bei einem Triangulationssensor sinkt die Genauigkeit mit größer werdendem Abstand). Dies bedeutet der Erfassungsbereich ist für eine hohe Genauigkeit klein zu wählen. Wenn beispielsweise größere Änderungen in der Umgebung im Rahmen einer erneuten Erkundung des Einsatzgebiets gesucht werden, so kann der Erfassungsbereich vergleichsweise groß gewählt werden. Die erkannten Änderungen können anschließend mit einer für die Erkundung einer Karte notwendigen Genauigkeit (und entsprechend angepassten Erfassungsbereich) erkundet werden.

Der Erfassungsbereich kann zusätzlich von den Hindernissen und Objekten der Umgebung abhängen. Beispielsweise kann der Roboter den Auftrag bekommen, eine bestimmte Person im Einsatzgebiet zu suchen. Da eine Person sich üblicherweise deutlich von einer Wand abhebt, kann zu Wänden ein größerer Abstand gehalten werden. Somit kann ein Flur oder großer Raum recht effizient durchsucht werden. Andererseits kann eine gesuchte Person in einem Bett oder auf einem Sofa liegen. An dieses muss der Roboter deutlich näher heranfahren, um zu erkennen, ob die gesuchte Person sich auf diesem befindet.

Ein Beispiel hierfür ist in Fig. 13 dargestellt. Ist das gesuchte Objekt X z.B. mit einem RFID-Chip versehen, mit dessen Hilfe der Roboter 100 das Objekt X erkennen und lokalisieren kann, ist der Erfassungsbereich Z (und auch die Genauigkeit der Lokalisierung) theoretisch durch die Reichweite des verwendeten RFID-Transceiver gegeben. Dieser Erfassungsbereich Z kann z.B. als eine Halbkugel modelliert werden, in deren Zentrum der Roboter (d.h. der RFID-Transceiver des Roboters) ist. Der Radius der Halbkugel entspricht der Reichweite der RFID-Übertragung. In der Ebene manifestiert sich dieser Erfassungsbereich als Kreis. In der Nähe von Möbelstücken (z.B. einem Regal) kann es sinnvoll sein, diesen Erfassungsbereich Z zu reduzieren (reduzierter Erfassungsbereich Z`) . Wenn der Erfassungsbereich z.B. ein Kreis mit einem Meter Radius ist, das gesuchte, mit einem RFID-Chip versehene Objekt X jedoch auf einem Sideboard (in Fig. 3, Hindernis H) ca. einen Meter über dem Boden liegt, dann reicht es nicht, wenn der Roboter in einem Meter Abstand an dem Sideboard H vorbeifährt; das Objekt wird außerhalb der Reichweite bleiben. Wenn für die Bewegungsplanung der Roboter den Erfassungsbereich in der Nähe von Hindernissen wie Möbel jedoch anpasst (z.B. den Radius auf 20 cm verkleinert, Erfassungsbereich Z`), dann hat der Roboter 100 eine Chance, das Objekt auf dem Sideboard zu erkennen. Insofern kann der Erfassungsbereich einerseits von dem gesuchten Objekt abhängen (ein Objekt mit RFID-Chip wird von einem Sensor mit einem anderen Erfassungsbereich detektiert wie z.B. die Basisstation des Roboters, wenn diese mit dem optischen Sensor identifiziert wird), und andererseits auch von in der Karte enthaltenen Orientierungsinformationen abhängen (in der Nähe einer Kontur eines Hindernisses wird der Erfassungsberiech z.B. kleiner gewählt).

Der Erfassungsbereich kann auch von den Sensorinformationen selbst abhängen. Beispielsweise hängt die erzielbare Genauigkeit einer Messung bei optischen Triangulationssensoren stark von der gemessenen Entfernung ab. Die Messtoleranz kann bei zwei Abstand z.B. +/- 10 cm betragen und bei einem halben Meter Abstand bereits nur mehr +/- 5 mm. Angenommen der Erfassungsbereich E eines optischen Triangulationssensors ist zunächst drei Meter. Wenn nun der Roboter in einem Abstand von 2 m ein Objekt detektiert, welches für die Suche relevant sein könnte, kann der Erfassungsbereich verkleinert werden, was zu Folge hat, dass der Roboter näher zu dem Objekt hin fahren muss, um die Fläche vollständig zu durchsuchen (weil in der Karte ja nur mehr die Spur des verkleinerten Erfassungsbereich Z` als "durchsucht" markiert wird). Bewegt sich der Roboter wieder von dem Objekt weg, kann der Erfassungsbereich wieder vergrößert werden.

Der Erfassungsbereich (ggf. der reduzierte Erfassungsbereich) wird in der Karte als "bereits durchsucht" markiert, während der Roboter durch das Einsatzgebiet navigiert. Hierdurch "weiß" der Roboter zu jedem Zeitpunkt, welchen Teil des Einsatzgebietes schon durchsucht wurde, und die Suche kann strukturiert geplant werden. Zusätzlich kann bei der Suche auf in der Karte gespeicherte Informationen zurück gegriffen werden. Wenn der Roboter beispielsweise einen neuen Raum suchen soll, so wird dieser immer an den in der Karte verzeichneten Außenwänden zu finden sein. Somit können diese bei der Suche mit erhöhter Priorität abgesucht werden.

Soll beispielsweise eine Person gesucht werden, so kann dies in Abhängigkeit von der Tageszeit und typischen Aufenthaltsorten geschehen. So kann der Roboter beispielsweise eine Suche am frühen Morgen im Schlafzimmer beginnen, während die Suche um die Mittagszeit in der Küche beginnen kann.

Der Roboter wird somit einen oder mehrere Punkte und/oder Bereiche des Einsatzgebietes, die für die Suche anzufahren sind, nach den zuvor beschriebenen Kriterien ermitteln. Hiervon kann einer priorisiert und somit ausgewählt werden, woraufhin (basierend auf den Karteninformationen) ein Weg zu dem ausgewählten Punkt und/oder Bereich geplant werden kann. Anschließend kann der Roboter entlang dieses Weges gesteuert werden. Beispielsweise kann der Roboter während der Fahrt basierend auf (langreichweitigen) Sensormessungen den ausgewählten Punkt bzw. Bereich überprüfen und neu priorisieren. Gegebenenfalls wird ein neuer Punkt bzw. Bereich mit höherer Priorität gewählt und angesteuert. Der Weg des Roboters kann entsprechend angepasst werden.

Beispielsweise kann in der Karte ein zu durchsuchender Bereich (Suchbereich) und/oder ein bekannter Bereich verzeichnet sein, in dem die Suche durchgeführt wird. Beispielsweise kann der Nutzer über eine HMI einen Suchbereich eingeben und auf diese Weise z.B. festlegen, dass die Suche in einem bestimmten Raum durchgeführt werden soll (z. B. Wohnzimmer). Dieser Raum kann so als "zu durchsuchen" markiert werden. Alternativ kann der Suchbereich auch indirekt festgelegt werden, in dem der Rest des Einsatzgebiets mit Ausnahme des zu durchsuchenden Raumes als "bekannt" markiert werden. Ein als "bekannt" markierter Bereich kann beispielsweise so markiert werden, als ob er schon mit dem Erfassungsbereich des Sensors vollständig erfasst worden wäre.

Die für die Suche anzufahrenden Punkte bzw. Teilbereiche werden basierend auf dem zu durchsuchenden Bereich (Suchbereich) (bzw. den als bekannt markierten Bereich) ermittelt. Beispielsweise kann ein Punkt auf oder in der Nähe des Randes des zu durchsuchenden bzw. bekannten Bereichs angesteuert werden.

Wenn mehrere Punkte oder Bereiche zur Auswahl stehen, kann beispielsweise derjenige gewählt werden, der am schnellsten zu erreichen ist (basierend auf der Pfadplanung in der vorhandenen Karte). Alternativ kann beispielsweise der kürzeste Weg bis zu dem Punkt/Bereich gewählt werden. Alternativ kann wie zuvor besprochen, der Abstand der Punkte/Bereiche zu Hindernissen oder anderen spezifischen Objekten in der Karte genutzt werden (z. B. in der Nähe einer Außenwand, Bett). Zusätzlich werden in der Karte verzeichnete Eigenschaften von Hindernissen, Objekten, Bereichen und/oder Räumen (z.B. Bezeichnung des Raums) oder die Tageszeit genutzt.

Die Suche kann solange durchgeführt werden, bis eine Abbruchbedingung erfüllt ist. Beispielsweise kann das Einsatzgebiet erfolglos vollständig abgesucht worden sein. Dies wird daran erkannt, dass der in der Karte gespeicherte Erfassungsbereich das in der Karte gespeicherte Einsatzgebiet und/oder das als zu "durchsuchende" Gebiet vollständig überdeckt. Beispielsweise wird die Suche beendet, wenn das gesuchte Objekt oder Ereignis gefunden wurde. Gegebenenfalls kann der Roboter in diesem Fall mit einem anderen Programm oder Strategie fortfahren. Zusätzlich kann die Suche fortgesetzt werden, bis eine vorgebbare Anzahl an Objekten bzw. Ereignissen gefunden wurde.

*Bewerten von Änderungen im Einsatzgebiet* - Da Veränderungen in der Umgebung sich störend auf die Navigation des Roboters auswirken können, ist es günstig, wenn der Roboter diese erkennen, bewerten und den Nutzer auf eine erkannte Störung aufmerksam machen kann. Beispielsweise kann der Roboter dem Nutzer vorschlagen, die Karte erneut zu erkunden, oder ihn zum Aufräumen auffordern.

Ein für den Roboter sehr gut zu ermittelndes Maß ist die befahrbare Fläche oder die nicht befahrbare Fläche. Diese kann beim Navigieren des Roboters durch sein Einsatzgebiet bei der Erledigung von Aufgaben ermittelt werden. Basierend hierauf kann zumindest ein Maß für die Befahrbarkeit des Gebiets ermittelt werden. Beispielsweise ist dies der Quotient der während eines Einsatzes ermittelten befahrbaren Fläche (Istwert) und der anhand der permanent gespeicherten Karte ermittelten (theoretisch) befahrbaren Fläche (Sollwert). Dieser Quotient kann in Prozent ausgedrückt werden. Wenn das Maß eine vordefinierbare Schwelle unterschreitet, kann der Nutzer benachrichtigt werden. Wenn z.B. nur mehr 75% oder weniger der theoretisch befahrbaren Fläche tatsächlich für den Roboter befahrbar ist, kann der Roboter den Nutzer über die HMI informieren.

Ein weiteres Beispiel für ein Maß für die Befahrbarkeit einer Fläche ist die benötigte Zeit, die für das Befahren der Fläche benötigt wird. Beispielsweise kann für einen Reinigungsroboter der Quotient aus benötigter Zeit je gereinigter Fläche ermittelt und mit einem Referenzwert verglichen werden. Beispielsweise kann dies für einzelne Teilgebiete (z.B. Räume) ermittelt werden. Wenn die benötigte Zeit je Fläche gering ist, so kann der Roboter seine Aufgabe (z. B. Reinigung) sehr effizient verrichten. Wenn der Roboter z.B. zahlreichen Hindernissen ausweichen muss so steigt die benötigte Zeit je Fläche an und die Verrichtung der Aufgabe (z. B. Reinigung) wird ineffizient. Durch einen Vergleich mit einem Referenzwert kann der Roboter beurteilen, ob die Effizienz der Durchführung seiner Aufgabe im Rahmen der üblichen Toleranz liegt oder stark eingeschränkt ist. Wenn festgestellt wird, dass die Effizienz z.B. in einem bestimmten Teilgebiet eingeschränkt ist, so kann dem Nutzer eine Nachricht gesandt werden, dass dieses Teilgebiet aufgeräumt oder neu erkundet werden sollte.

Weitere Beispiele für Maße für die Befahrbarkeit einer Fläche sind die benötigte Zeit innerhalb Teilgebiets, die benötigte Zeit je zurückgelegter Wegstrecke, oder die gesamte Wegstrecke zur Verrichtung einer Aufgabe in einem Teilgebiet.

Zusätzlich kann die zeitliche Entwicklung und/oder der Ort der Einschränkung berücksichtigt werden. Hierzu kann die ermittelte befahrbare Fläche und/oder ein Maß für die Befahrbarkeit für eine gewisse Zeit (z. B. eine Woche, ein Monat) gespeichert werden. Die gespeicherten Informationen können bei der Entscheidung, ob und wie ein Benutzer benachrichtigt wird, mit berücksichtigt werden. Beispielsweise kann in einem als "Kinderzimmer" markiertem Teilgebiet festgestellt werden, dass die befahrbare Fläche über einen längeren Zeitraum (z. B. eine Woche) abnimmt oder sehr klein bleibt. Der Roboter kann nun eine Nachricht an eine dem Kinderzimmer zugeordnete HMI 200 (z. B. das Smartphone des Kindes) mit der Aufforderung "aufzuräumen" senden. Wenn dies zu keiner Änderung z. B. am folgenden Tag geführt hat, kann eine weiter Nachricht an eine weiteres HMI 200 (z. B. Smartphone der Eltern) gesendet werden. Zusätzlich oder alternativ kann eine entsprechende Nachricht in einem sozialen Netzwerk gesendet werden.

Beispielsweise kann eine befahrbare Fläche erkannt werden, die nicht in der Karte verzeichnet ist. Der Roboter daraus schließe, dass die nicht in der Karte verzeichnete Fläche ein neues Teilgebiet (ein neuer Raum) ist und dem Nutzer vorschlagen, diesen erkunden zu lassen, und die vorhandene Karte entsprechen zu aktualisieren. Es sei angemerkt, dass durch eine geöffnete Haus- oder Wohnungstür ebenso eine neue befahrbare Fläche erkannt werden kann. Deswegen kann es sinnvoll sein, auf eine Bestätigung des Nutzers zu warten, bevor das neue Teilgebiet erkundet wird.

Beim Erfassen der befahrbaren Fläche kann insbesondere geprüft werden, ob Flächen befahrbar sind, die in der Karte als nicht befahrbar gekennzeichnet sind. Dies kann beispielsweise ein Hinweis auf umgestellte Möbel sein. Zusätzlich oder alternativ kann geprüft werden, ob Flächen befahrbar sind und außerhalb des kartierten Bereichs liegen. Dies kann auf einen neuen noch nicht kartierten Bereich hindeuten (siehe oben).

Zusätzlich oder alternativ kann geprüft werden, ob Flächen nicht befahrbar sind, die bei einem vorhergehenden Einsatz befahrbar waren und/oder in der Karte als befahrbar gekennzeichnet wurden. Dies kann ein Hinweis für ein neues Möbelstück sein. Der Roboter kann somit dem Nutzer eine Aktualisierung der Karte vorschlagen. Jedoch kann es sich auch um vorübergehend abgestellte Gegenstände handeln. Um dies zu unterscheiden, kann ermittelt werden, was ein Befahren der Fläche verhindert. Ein großes durch gerade Kanten gekennzeichnetes Hindernis kann auf Möbelstücke hindeuten. Kleine verteilte Hindernisse können auf vorübergehende Störungen hindeuten. Ein vor einer Wand stehendes Hindernis wird üblicherweise ebenfalls ein Möbelstück oder ein nicht nur vorrübergehend vorhandenes Hindernis sein, wohin ein unregelmäßig geformtes, mitten in einem Freifläche stehendes Hindernis (z.B. eine Reisetasche) in der Regel eher ein vorrübergehend vorhandenes Hindernis darstellt. Die nicht befahrbare Fläche kann somit als "vorübergehende Störung" (vorübergehend vorhandenes Hindernis) oder "dauerhafte Störung" (dauerhaft vorhandenes Hindernis) klassifiziert werden. Die Klassifikation erfolgt wie erläutert beispielsweise anhand der detektierten geometrischen Form, ihrer Größe und ihrer Position im Einsatzgebiet (z.B. relativ zu einer Wand oder anderen Hindernissen). Eine derartige Klassifikation der Störung kann genutzt werden, um zu entscheiden, ob eine Aktualisierung der Karte vorgeschlagen wird oder dem Nutzer eine Aufräumerinnerung gesendet wird.

## Patentansprüche

1. Ein Verfahren, das folgendes umfasst:
Speichern einer Karte (500) eines Einsatzgebietes (DA) eines autonomen mobilen Roboters (100), wobei die Karte (500) Orientierungsinformationen (505) enthält, welche die Struktur der Umgebung im Einsatzgebiet (DA) repräsentieren, und wobei die Karte (500) Metainformationen (510) enthält;
Erneutes Erkunden zumindest eines Teils des Einsatzgebietes (DA), wobei der Roboter mittels eines Sensors (121) Informationen über die Struktur seiner Umgebung im Einsatzgebietes (DA) erfasst;
Aktualisieren der Karte (500) des Einsatzgebietes (DA), und
Speichern der aktualisierten Karte (500) für künftige Robotereinsätze,
wobei das Aktualisieren der Karte (500) folgendes umfasst:
Ermitteln von Änderungen im Einsatzgebiet (DA) basierend auf den während der Erkundung erfassten Informationen über die Struktur der Umgebung und den in der Karte (500) bereits gespeicherten Orientierungsinformationen (505), und
Aktualisieren der Orientierungsinformationen (505) und der Metainformationen (510) basierend auf den ermittelten Änderungen.

2. Das Verfahren gemäß Anspruch 1,
Verrichten einer Serviceaufgabe durch den Roboter, wobei die in der gespeicherten Karte (505) enthaltenen Orientierungsinformationen (505) unverändert bleiben,
wobei die Serviceaufgabe insbesondere eine der folgenden ist: eine Reinigungsaufgabe, eine Transportaufgabe, eine Inspektionsaufgabe, oder eine Unterhaltungsaufgabe.

3. Das Verfahren gemäß Anspruch 1 oder 2,
wobei das empfangene Kommando Information enthält, die den neu zu erkundenden Teil des Einsatzgebietes (DA) spezifiziert, wobei der neu zu erkundende Teil das gesamte Einsatzgebiet (DA), ein vordefiniertes Teilgebiet oder ein vom Nutzer spezifizierter Bereich sein kann.

4. Das Verfahren gemäß einem der Ansprüche 1 bis 3,
wobei das Ermitteln von Änderungen im Einsatzgebiet (DA) das Erstellen einer neuen Karte (502) und das Ermitteln der Änderungen durch Vergleich der neuen Karte (502) mit der gespeicherten Karte (500) umfasst,
wobei aus der gespeicherten Karte (500) zumindest teilweise Metainformationen in die neue Karte (502) übernommen werden;
wobei nach Abschluss der erneuten Erkundung die gespeicherte Karte (500) durch die neue Karte (502) ersetzt wird.

5. Das Verfahren gemäß einem der Ansprüche 1 bis 3,
wobei das Aktualisieren der Orientierungsinformationen (505) und der Metainformationen (510) umfasst:
Erstellen einer temporären Arbeitskopie der gespeicherten Karte (500) und Eintragen erkannter Änderungen in die Arbeitskopie.

6. Das Verfahren gemäß einem der Ansprüche 1 bis 5,
wobei das erneute Erkunden des zumindest einen Teils des Einsatzgebietes (DA) umfasst;
Navigieren durch das Einsatzgebiet (DA) bis der zu erkundende Teil vollständig von einem Erfassungsbereich (Z) des Sensors (121) erfasst wurde, und die Karte des zu erkundenden Teils einen zumindest durch Hindernisse und nicht zu erkundende Teile des Einsatzgebiets abgeschlossenen Bereich umfasst.

7. Das Verfahren gemäß einem der Ansprüche 1 bis 6,
wobei Strukturen in Bereichen, in denen Änderungen im Einsatzgebiet (DA) ermittelt wurden, mit dem Sensor (121) mit höherer Genauigkeit erfasst werden als in anderen Bereichen.

8. Das Verfahren gemäß Anspruch 7,
wobei die Genauigkeit der Erfassung durch eines der folgenden erhöht wird: Erhöhen der Verweildauer in einem Bereich, dichteres Heranfahren an Hindernisse, Vergrößern während der Erkundung vom Roboter befahrenen Fläche, Verringerung der Geschwindigkeit, Erhöhen der Dauer der Erfassung der Strukturen.

9. Das Verfahren gemäß einem der Ansprüche 1 bis 8, wobei das Aktualisieren der Metainformationen (510) eines oder mehrere der folgenden umfasst:
Anpassen eines Bereichs, in dem eine Serviceaufgabe durch den Roboter verrichtet werden soll;
Anpassen der Größe, Form und/oder Anzahl an Teilgebieten im Einsatzgebiet (DA);
Anpassen von Kalenderinformationen;
Eintragen eines Bodenbelags für eine neu erkannte Fläche basierend auf benachbarten Flächen; oder
Verschieben von mit Hindernissen verknüpfte Gefahrenzonen oder Sperrbereichen.

10. Das Verfahren gemäß einem der Ansprüche 1 bis 9, wobei das Aktualisieren der Orientierungsinformationen (505) umfasst:
Lokalisieren des Roboters in der gespeicherten Karte (500); und
Anpassen der in der Karte gespeicherten Orientierungsinformationen (505) basierend auf den vom Sensor erfassten Informationen über die Struktur seiner Umgebung im Einsatzgebiet (DA).

11. Ein autonomer mobiler Roboter, der folgendes aufweist:
eine Antriebseinheit (170) zum Bewegen des Roboters (100) in einem Einsatzgebiet (DA) des Roboters (100);
eine Sensoreinheit (120) zum Erfassen von Informationen betreffend die Struktur der Umgebung im Einsatzgebiet (DA);
eine Steuereinheit (150) mit einem Navigationsmodul (151), das dazu ausgebildet ist, mittels einer Erkundungsfahrt eine Karte des Einsatzgebietes (DA) zu erstellen und für die Verwendung in künftigen Einsätzen des Roboters abzuspeichern;
eine Kommunikationseinheit (140) zum Empfangen einer Nutzeranweisung betreffend eine Serviceaufgabe sowie zum Empfangen einer Nutzeranweisung zum Aktualisieren der gespeicherten Karte (500);
wobei das Navigationsmodul (151) weiter dazu ausgebildet ist,
den Roboter (100) beim Verrichten einer Serviceaufgabe anhand der gespeicherten Karte (500) und anhand den von der Sensoreinheit (120) erfassten Informationen durch das Robotereinsatzgebietes (DA) zu navigieren,
wobei im Zuge eines erneuten Erkundens die in der gespeicherten Karte (500) enthaltenen und für die Navigation relevanten Informationen aktualisiert werden, wobei Änderungen im Einsatzgebiet (DA) basierend auf den im Zuge des Erkundens von der Sensoreinheit (120) erfassten Informationen und in der Karte bereits gespeicherten Informationen ermittelt werden, wobei die Orientierungsinformationen und Metainformationen aktualisiert werden.

## Claims

1. A method comprising:
storing a map (500) of a deployment area (DA) of an autonomous mobile robot (100), the map (500) containing orientation information (505) representing the structure of the environment in the deployment area (DA), and the map (500) containing meta information (510);
re-exploring at least one part of the deployment area (DA), wherein the robot uses a sensor (121) to detect information regarding the structure of its environment in the deployment area (DA);
updating the deployment area (DA) map (500), and
storing the updated map (500) for future robot deployments,
wherein updating the map (500) comprises:
determining changes in the deployment area (DA) based on the information regarding the structure of the environment detected during exploring and the orientation information (505) already stored in the map (500), and
updating the orientation information (505) and the meta information (510) based on the determined changes.

2. The method according to claim 1,
performing a service task by the robot, wherein the orientation information (505) contained in the stored map (505) remain unchanged,
wherein the service task is particularly one of the following: a cleaning task, a transport task, an inspection task, or an entertainment task.

3. The method according to claim 1 or 2,
wherein the received command contains information specifying the part of the deployment area (DA) to be re-explored, wherein the part to be re-explored can be the entire deployment area (DA), a predefined partial area or a user-specified region.

4. The method according to any one of claims 1 to 3,
wherein determining changes in the deployment area (DA) comprises creating a new map (502) and determining the changes by comparing the new map (502) with the stored map (500),
wherein at least some meta information from the stored map (500) is transferred to the new map (502);
wherein, upon completion of the re-exploration, the stored map (500) is replaced by the new map (502).

5. The method according to any one of claims 1 to 3,
wherein updating the orientation information (505) and the meta information (510) comprises:
creating a temporary working copy of the stored map (500) and inputting detected changes into the working copy.

6. The method according to any one of claims 1 to 5,
wherein re-exploring the at least one part of the deployment area (DA) comprises;
navigating through the deployment area (DA) until the part to be explored has been completely detected by a detection area (Z) of the sensor (121), and the map of the part to be explored comprises a region that is closed off at least by obstacles and parts of the deployment area that are not to be explored.

7. The method according to any one of claims 1 to 6,
wherein structures in regions in which changes in the deployment area (DA) have been determined are detected by the sensor (121) with greater accuracy than in other regions.

8. The method according to claim 7,
wherein the accuracy of the detection is increased by one of the following: increasing the time spent in a region, getting closer to obstacles, increasing the area covered by the robot during exploration, reducing the speed, increasing the duration of the detection of the structures.

9. The method according to any one of claims 1 to 8, wherein updating the meta information (510) comprises one or more of the following:
adjusting a region in which a service task is to be performed by the robot;
adjusting the size, shape and/or number of sub-areas in the deployment area (DA);
adjusting calendar information;
registering a floor covering for a newly detected surface based on adjacent surfaces; or
moving danger zones or restricted areas linked to obstacles.

10. The method according to any one of claims 1 to 9, wherein updating the orientation information (505) comprises:
locating the robot in the stored map (500); and
adjusting the orientation information (505) stored in the map based on the information detected by the sensor regarding the structure of its environment in the deployment area (DA).

11. An autonomous mobile robot, having:
a drive unit (170) for moving the robot (100) within a deployment area (DA) of the robot (100);
a sensing unit (120) for detecting information concerning the structure of the environment in the deployment area (DA);
a control unit (150) with a navigation module (151) designed to create a map of the deployment area (DA) by means of an exploration trip and to store it for use in future deployments of the robot;
a communication unit (140) for receiving a user's instruction concerning a service task and for receiving a user's instruction for updating the stored map (500);
wherein the navigation module (151) is further designed to navigate the robot (100) through the robot deployment area (DA) when performing a service task using the stored map (500) and using the information detected by the sensing unit (120),
wherein, in the course of re-exploration, the information contained in the stored map (500) and relevant for navigation is updated, wherein changes in the deployment area (DA) based on the information detected by the sensing unit (120) in the course of exploration and information already stored in the map are determined, wherein the orientation information and meta information are updated.

## Revendications

1. Procédé comprenant les éléments suivants :
l'enregistrement d'une carte (500) d'une zone d'intervention (DA) d'un robot mobile autonome (100), dans lequel la carte (500) contient des informations d'orientation (505) représentant la structure de l'environnement dans la zone d'intervention (DA), et dans lequel la carte (500) contient des métadonnées (510) ;
la réexploration d'au moins une partie de la zone d'intervention (DA), dans lequel le robot utilise un capteur (121) pour enregistrer des informations sur la structure de son environnement dans la zone d'intervention (DA) ;
la mise à jour de la carte (500) de la zone d'intervention (DA), et
l'enregistrement de la carte mise à jour (500) pour les futures interventions de robots,
dans lequel la mise à jour de la carte (500) comprend les éléments suivants :
la détermination des changements dans la zone d'intervention (DA) sur la base des informations sur la structure de l'environnement enregistrées pendant la reconnaissance et les informations d'orientation (505) déjà stockées dans la carte (500), et
la mise à jour des informations d'orientation (505) et des métadonnées (510) sur la base des changements déterminés.

2. Procédé selon la revendication 1,
le robot exécute une tâche de service, dans lequel les informations d'orientation (505) contenues dans la carte stockée (505) restent inchangées,
dans lequel la tâche de service est notamment l'une des suivantes : une tâche de nettoyage, une tâche de transport, une tâche d'inspection ou une tâche de divertissement.

3. Procédé selon la revendication 1 ou 2,
dans lequel la commande reçue contient des informations spécifiant la partie réexplorée de la zone d'intervention (DA), dans lequel la partie réexplorée peut être la totalité de la zone d'intervention (DA), une zone partielle prédéfinie ou une zone spécifiée par l'utilisateur.

4. Procédé selon l'une des revendications 1 à 3,
dans lequel la détermination des changements dans la zone d'intervention (DA) comprend la création d'une nouvelle carte (502) et la détermination des changements en comparant la nouvelle carte (502) avec la carte stockée (500),
dans lequel au moins certaines métadonnées de la carte stockée (500) sont transférées vers la nouvelle carte (502) ;
dans lequel à l'achèvement de la réexploration, la carte stockée (500) est remplacée par la nouvelle carte (502).

5. Procédé selon l'une des revendications 1 à 3,
dans lequel la mise à jour des informations d'orientation (505) et des métadonnées (510) comprend :
la création d'une copie de travail temporaire de la carte enregistrée (500) et la validation des modifications détectées dans la copie de travail.

6. Procédé selon l'une des revendications 1 à 5,
dans lequel la réexploration d'au moins une partie de la zone d'intervention (DA) comprend ;
la navigation dans la zone d'intervention (DA) jusqu'à ce que la partie à explorer soit entièrement recouverte par une zone de détection (Z) du capteur (121), et la carte de la partie à explorer comporte une zone fermée au moins par des obstacles et des parties de la zone d'intervention qui ne doivent pas être explorées.

7. Procédé selon l'une des revendications 1 à 6,
dans lequel les structures dans les zones, dans lesquelles des changements dans la zone d'intervention (DA) ont été déterminés, sont détectées avec le capteur (121) avec une plus grande précision que dans d'autres zones.

8. Procédé selon la revendication 7,
dans lequel la précision de la détection est augmentée par l'un des éléments suivants : une augmentation du temps passé dans une zone, un rapprochement d'obstacles, un agrandissement de la zone couverte par le robot lors de l'exploration, une réduction de la vitesse, une augmentation de la durée de détection des structures.

9. Procédé selon l'une des revendications 1 à 8, dans lequel la mise à jour des métadonnées (510) comprend une ou plusieurs des opérations suivantes :
l'ajustement d'une zone dans laquelle une tâche de service doit être effectuée par le robot ;
l'ajustement de la taille, de la forme et/ou du nombre de sous-zones dans la zone d'intervention (DA) ;
l'ajustement des informations du calendrier ;
l'enregistrement d'un revêtement de sol pour une surface nouvellement reconnue sur la base des surfaces voisines ; ou
le déplacement des zones dangereuses ou des zones restreintes liées aux obstacles.

10. Procédé selon l'une des revendications 1 à 9, dans lequel la mise à jour des informations d'orientation (505) comprend :
la localisation du robot dans la carte stockée (500) ; et
le réglage des informations d'orientation stockées dans la carte (505) en fonction des informations recueillies par le capteur sur la structure de son environnement dans la zone d'intervention (DA).

11. Robot mobile autonome, comportant les éléments suivants :
une unité de propulsion (170) pour déplacer le robot (100) dans une zone d'intervention (DA) du robot (100) ;
une unité de capteur (120) pour acquérir des informations relatives à la structure de l'environnement dans la zone d'intervention (DA) ;
une unité de commande (150) avec un module de navigation (151) qui est conçu pour créer une carte de la zone d'intervention (DA) au moyen d'un voyage de reconnaissance et pour la stocker pour une utilisation dans les futures interventions du robot ;
une unité de communication (140) pour recevoir une instruction d'utilisateur concernant une tâche de service et pour recevoir une instruction d'utilisateur pour mettre à jour la carte stockée (500) ;
dans lequel le module de navigation (151) est en outre conçu pour faire naviguer le robot (100) à travers la zone d'intervention du robot (DA) lors de l'exécution d'une tâche de service en utilisant la carte stockée (500) et en utilisant les informations enregistrées par l'unité de capteur (120),
dans lequel, au cours d'une réexploration, les informations contenues dans la carte stockée (500) et pertinentes pour la navigation sont mises à jour, dans lequel les changements dans la zone d'intervention (DA) sont déterminés sur la base des informations enregistrées par l'unité de capteur (120) au cours de l'exploration et dans la carte, des informations déjà stockées sont déterminées, dans lequel les informations d'orientation et les métadonnées sont mises à jour.
